# EUROPEAN PATENT APPLICATION

(11) **EP 3 850 951 A1**
(43) Date of publication of application: **21.07.2021**
(21) Application number: 20827395.3
(22) Date of filing: 27.01.2020
(51) Int. Cl.: A23L 5/00, A23L 7/10, A23L 11/00, A23L 19/00, A23L 27/00, A23L 2/52

(54) **SOLID FOOD PRODUCT COMPOSITION THAT CONTAINS INSOLUBLE-DIETARY-FIBER-CONTAINING INGREDIENT, AND METHOD FOR MANUFACTURING SOLID FOOD PRODUCT COMPOSITION**

(30) Priority: 17.06.2019 JP 2019112073
(71) Applicant: Mizkan Holdings Co., Ltd., Handa-shi, Aichi 475-8585 (JP)
(72) Inventor: ODA, Ryoichi, Handa-shi Aichi 4758585 (JP); HIRAMATSU, Shintarou, Handa-shi Aichi 4758585 (JP); HOKARI, Nobuyuki, Handa-shi Aichi 4758585 (JP); NISHIOKA, Daisuke, Handa-shi Aichi 4758585 (JP)
(74) Representative: Mewburn Ellis LLP
(86) International application number: PCT/JP2020/002707
(87) International publication number: WO 2020/255469

(57) **Abstract**

Provided is a solid food composition which achieves both chewy texture and easiness in biting off.

A solid food composition containing a foodstuff containing insoluble dietary fibers, satisfying (1) to (5) :
(1) containing edible part and insoluble dietary fiber localized site of one or more foodstuffs containing insoluble dietary fibers, wherein content of the foodstuff: 5 to 95 mass% (total dry mass);
(2) insoluble dietary fiber content: ≥ 3 mass%;
(3) moisture content: < 30 mass%;
(4) 50% integrated diameter of particle size in aqueous dispersion of the solid food composition after ultrasonication: more than 5 µm and 1,000 µm or less;
(5) average of minimum differential value by Method 1: ≥ -900 kN/m²%:

[Method 1]

To press surface of the solid food composition having material temperature of 20°C to strain ratio of 30% at descending speed of 1 mm/second by plate-like plunger having cross-sectional area of 5 mm² (1 mm in length × 5 mm in width) using texture analyzer, measure stress (kN/m²) continuously at interval of 0.1 seconds, and divide a stress value difference (kN/m²) between the strain ratios by strain ratio difference (%) to determine differential value (kN/m²%) at each strain ratio (%).

## Description

### Technical Field

The present invention relates to a solid food composition containing an insoluble dietary fiber-containing dietary material and a process for producing the same.

### Background of the Invention

Due to the diversification of preferences of consumers, there is a demand for a chewable texture such as rice cake or gum in a solid food composition. A chewable texture means a physical property that deforms gently while having a shape retaining property and a certain repulsive force when chewed. However, in general, there has been a problem that a food having a chewable texture is difficult to be chewed due to its texture.

As a technique for improving the adhesion of food to teeth during eating while having a chewable texture, the following can be mentioned. Patent Literature 1 discloses a process for producing a caramel, which is characterized in that an oil-in-water emulsified product containing a liquid saccharide is blended in a raw material in an amount of 15 to 60 mass %. Patent Literature 2 discloses a technique relating to a powder coating agent in which moisture absorption of a candy-like glossy coating is suppressed and a sagging feeling is sustained. Patent Literature 3 discloses a technique relating to baked confectionery such as a sable, a biscuit, a cookie, or the like, which has a crisp texture, hardly gets pasty in the mouth when chewed, and is hard to stick to teeth, and has good mouth melting.

### Citations

### Patent Literatures

[Patent Literature 1] JP 2018-050505
[Patent Literature 2] JP 2018-050604
[Patent Literature 3] JP 2010-004806

### Summary of the Invention

### Problem

However, in the method of Patent Literature 1, there has been a problem that it is difficult to apply other than a continuously homogeneous object of the content composition, such as a caramel. In the method of Patent Literature 2, it is possible to suppress adhesion to teeth by suppressing moisture absorption on the surface of confectionery by a coating agent, and there has been a problem that the effect is not exerted up to the contents of confectionery. In the method of Patent Literature 3, although a texture which is difficult to adhere to teeth is obtained, there has been a problem that a chewable texture cannot be imparted on the contrary.

As described above, a technique for achieving both chewable texture and chewiness (suppression of adhesion to teeth) in foods, particularly confections, has not yet been established.

The present invention aims to provide a solid food composition which has both chewable texture and improved adherence serving to easiness in biting off.

### Solution to Problem

As a result of energetic studies in view of the above circumstances, the present inventors found that the above problem can be easily solved at the same time by producing a solid food using fine particles containing both of a soluble site and an insoluble dietary fiber localized site of a food material containing insoluble dietary fiber, which were not present so far, in a specific proportion in the composition specific, thereby completing the present invention.

[1] A solid food composition containing a foodstuff containing insoluble dietary fibers, the solid food composition satisfying the following characteristics (1) to (5):
   (1) the solid food composition contains an edible part and an insoluble dietary fiber localized site of one or more foodstuffs containing insoluble dietary fibers, wherein a content of the foodstuff is 5 mass% or more and 95 mass% or less in terms of total dry mass;
   (2) an insoluble dietary fiber content is 3 mass% or more;
   (3) a moisture content is less than 30 mass%;
   (4) a 50% integrated diameter of particle size of particles in an aqueous dispersion of the solid food composition after ultrasonication is more than 5 µm and 1,000 µm or less; and
   (5) an average of a minimum differential value measured by Method 1 is -900 kN/m²% or more:

### [Method 1]

To press a surface of the solid food composition having a material temperature of 20°C to a strain ratio of 30% at a descending speed of 1 mm/second by a plate-like plunger having a cross-sectional area of 5 mm² (1 mm in length × 5 mm in width) using a texture analyzer, measure a stress (kN/m²) continuously at an interval of 0.1 seconds, and then divide a stress value difference (kN/m²) between the strain ratios by a strain ratio difference (%) to determine a differential value (kN/m²%) at each strain ratio (%).
[2] The solid food composition according to [1], wherein an average of a maximum value of the stress measured by Method 1 is 8,000 kN/m² or less.
[3] The solid food composition according to [1] or [2], wherein a difference in a cumulative frequency in % of a particle size of 100 µm or more and 1,000 µm or less of the particles in the aqueous dispersion of the solid food composition before and after ultrasonication is within +30%.
[4] The solid food composition according to any one of [1] to [3], wherein a maximum particle size of the particles in the aqueous dispersion of the solid food composition after ultrasonication is 300 µm or more.
[5] The solid food composition according to any one of [1] to [4], wherein a difference in a specific surface area per unit volume (m²/mL) of the particles in the aqueous dispersion of the solid food composition before and after ultrasonication is 0.5 or less.
[6] The solid food composition according to any one of [1] to [5], wherein a proportion of a region where a minimum differential value is -900 kN/m²% or more when measured by Method 1 is 20% or more of a surface of the solid food composition.
[7] The solid food composition according to any one of [1] to [6], wherein a protein content is 2 mass% or more.
[8] The solid food composition according to any one of [1] to [7], wherein a sucrose content is less than 50 mass%.
[9] The solid food composition according to any one of [1] to [8], containing no egg and/or no milk.
[10] The solid food composition according to any one of [1] to [9], wherein the foodstuff containing insoluble dietary fibers is one or more selected from the group consisting of nuts, grains, pulses, vegetables, potatoes, and fruits.
[11] The solid food composition according to any one of [1] to [10], wherein the foodstuff containing insoluble dietary fibers is one or more selected from the group consisting of corn, soybean, pea, cabbage, sweet potato, paprika, beet, spinach, and citrus fruits.
[12] The solid food composition according to any one of [1] to [11], wherein the foodstuff containing insoluble dietary fibers is the foodstuff subjected to drying treatment.
[13] The solid food composition according to any one of [1] to [12], wherein a water activity value of the foodstuff containing insoluble dietary fibers is 0.95 or less.
[14] The solid food composition according to any one of [1] to [13], containing the edible part and the insoluble dietary fiber localized site of the same kind of foodstuff containing insoluble dietary fibers.
[15] The solid food composition according to any one of [1] to [14], wherein {insoluble dietary fiber localized site/(edible part + insoluble dietary fiber localized site)} of the foodstuff containing insoluble dietary fibers is 1 mass% or more.
[16] The solid food composition according to any one of [1] to [15], wherein the insoluble dietary fiber localized site of the foodstuff containing insoluble dietary fibers contains one or more selected from the group consisting of core of corn, pod of soybean, pod of pea, core of cabbage, both ends of sweet potato, seed or calyx of paprika, skin of beet, plant foot of spinach, and skin of citrus fruits.
[17] A food/drink comprising the solid food composition according to any one of [1] to [16].
[18] A liquid or solid seasoning comprising the solid food composition according to any one of [1] to [16].
[19] A method for manufacturing the solid food composition according to any one of [1] to [16], comprising the following steps (i) to (ii):
   (i) with respect to a composition containing an edible part and an insoluble dietary fiber localized site of one or more foodstuffs containing insoluble dietary fibers, mixing and kneading the food stuff such that a content of the foodstuff is 5 mass% or more and 95 mass% or less in terms of total dry mass and an insoluble dietary fiber content is 3 mass% or more to manufacture dough;
   (ii) forming the dough under pressurized conditions followed by drying until a maximum particle size of particles in an aqueous dispersion of the solid food composition after ultrasonication is 300 µm or more and an average of a minimum differential value measured by Method 1 is -900 kN/m²% or more to obtain a solid food composition.
[20] The method according to [19], comprising, in the step (ii), forming the dough under pressurized conditions until the solid food composition has a region where a minimum differential value at a strain ratio of 30% or less is -900 kN/m²% or more and a maximum stress is 8,000 kN/m² or less, when a surface of the solid food composition is measured by Method 1.
[21] The method according to [19] or [20], comprising, in the step (ii), forming the dough under pressurized conditions such that a difference in cumulative frequency in % of the particle size of 100 µm or more and 1,000 µm or less of the particles in the aqueous dispersion of the solid food composition before and after ultrasonication is within ±30%.
[22] The method according to any one of [19] to [21], comprising, in the step (ii), forming the dough under pressurized conditions such that a specific surface area per unit volume (m²/mL) after ultrasonication is 0.5 or less.
[23] The method according to any one of [19] to [22], comprising, in the step (i), mixing and kneading the foodstuff such that a protein content is 2 mass% or more to manufacture the dough.
[24] The method according to any one of [19] to [23], comprising, in the step (i), mixing and kneading the foodstuff such that a sucrose content is less than 50 mass% to manufacture the dough.
[25] The method according to any one of [19] to [24], comprising, in the step (i), mixing and kneading the foodstuff so as to contain no egg and/or no milk to manufacture the dough.
[26] The method according to any one of [19] to [25], comprising, in the step (i), subjecting the foodstuff containing insoluble dietary fibers to drying treatment in advance.
[27] The method according to any one of [19] to [26], comprising, in the step (i), blending a crushed product of the edible part and the insoluble dietary fiber localized site of the foodstuff containing insoluble dietary fibers and a carbohydrate.
[28] The method according to any one of [19] to [27], comprising, in the step (ii), drying the solid food composition after forming at a temperature less than 110°C.
[29] The method according to any one of [19] to [28], wherein in the step (ii), drying is performed such that the difference in the moisture content before and after drying treatment is less than 30 mass%.
[30] A method for manufacturing a food/drink, comprising incorporating the solid food composition according to any one of [1] to [16].
[31] A method for manufacturing a liquid or solid seasoning, comprising incorporating the solid food composition according to any one of [1] to [16].

### Advantageous Effect of the Invention

The present invention provides a solid food composition which achieves both a chewy texture and easiness in biting off.

### Description of Embodiments

The present invention relates to a solid food composition containing a foodstuff containing insoluble dietary fibers, satisfying the following characteristics (1) to (5):
(1) the solid food composition contains an edible part and an insoluble dietary fiber localized site of one or more foodstuffs containing insoluble dietary fibers, wherein a content of the foodstuff is 5 mass% or more and 95 mass% or less in terms of total dry mass;
(2) an insoluble dietary fiber content is 3 mass% or more;
(3) a moisture content is less than 30 mass%;
(4) a 50% integrated diameter of particle size of particles in an aqueous dispersion of the solid food composition after ultrasonication is more than 5 µm and 1,000 µm or less; and
(5) an average of a minimum differential value measured by Method 1 is -900 kN/m²% or more.

### [Method 1]

A surface of the solid food composition having a material temperature of 20°C is pressed to a strain ratio of 30% at a descending speed of 1 mm/second by a plate-like plunger having a cross-sectional area of 5 mm² (1 mm in length × 5 mm in width) using a texture analyzer, and a stress (kN/m²) is continuously measured at an interval of 0.1 seconds, then a stress value difference (kN/m²) between the strain ratios is divided by a strain ratio difference (%) to determine a differential value (kN/m²%) at each strain ratio (%).

### [Solid food composition]

In the present invention, the solid food composition refers to a so-called solid or semi-solid food composition. In the solid food composition of the present invention, when a viscosity measured value obtained by a Bostwick consistometer at 20°C is unmeasurable (i.e., 0 cm), the composition is not deformed and can maintain its form while containing the edible part and the insoluble dietary fiber localized site of the foodstuff, and thus preferred. Specifically, regarding the Bostwick consistometer, one having a trough length of 28.0 cm in which the viscosity measured value, i.e., the flow-down distance of a sample in the trough is at most 28.0 cm is used, and for example, the viscosity measured value can be obtained by horizontally installing a KO-type Bostwick viscometer (manufactured by Fukayatekkousyo) using a level, closing the gate before filling up the reservoir with a sample whose temperature is adjusted to 20°C, counting time at the same time when a trigger is depressed to open the gate, and then measuring the flow-down distance of the material in the trough at a point of time after a lapse of 1 second. It is preferred that the solid food composition of the present invention do not flow down under the aforementioned conditions and thus the flow-down distance thereof cannot be measured, and the viscosity measurement value thereof be unmeasurable (i.e., 0 cm). Preferred specific examples of the solid food composition of the present invention include confectioneries from the viewpoint of more significantly exerting the effect of the present invention, and food bar (bar food), bulk granola (granola bar), and the like are more preferred.

### [Insoluble dietary fibers]

The solid food composition of the present invention contains insoluble dietary fibers. In the present invention, "dietary fibers" mean the entirety of indigestible components in the food which are not digested by human digestive enzymes. In the present invention, "insoluble dietary fibers" refer to water-insoluble ones among dietary fibers. Examples of the insoluble dietary fibers include, but are not limited to, lignin, cellulose, hemicellulose, chitin, and chitosan. However, among the insoluble dietary fibers, a solid food composition containing lignin, in particular, acid-soluble lignin is preferred because the effect that the solid food composition becomes not too hard can be obtained by applying the present invention.

The solid food composition of the present invention contains insoluble dietary fibers in more than a certain content. Specifically, the lower limit of the content of insoluble dietary fibers in the solid food composition of the present invention is 3 mass% or more. Among them, it is preferred to be 4 mass% or more, further preferably 5 mass% or more, further preferably 6 mass% or more, further preferably 7 mass% or more, further preferably 8 mass% or more, further preferably 9 mass% or more, and particularly preferably 10 mass% or more. The content of insoluble dietary fibers is preferably not less than the lower limit from the viewpoint of easiness in biting off at the time of eating (suppressing adhesion to the teeth). On the other hand, the upper limit of the content is not particularly limited, but may usually be 50 mass% or less from the viewpoint of a good texture (not too hard), and is above all preferably 40 mass% or less, and particularly preferably 30 mass% or less.

The solid food composition of the present invention contains insoluble dietary fibers derived from at least one or more foodstuffs containing insoluble dietary fibers. In addition, the solid food composition of the present invention may contain insoluble dietary fibers derived from other than foodstuffs, but the majority of the insoluble dietary fibers to be contained is preferably derived from the foodstuff blended into the composition, all the insoluble dietary fibers to be contained is more preferably derived from the foodstuff blended into the composition. When the solid food composition of the present invention contains the insoluble dietary fibers derived from other than foodstuffs, their origin is not limited. For example, the origin may be derived from various natural materials other than the foodstuff containing insoluble dietary fibers, or synthetic origin, or the two may be mixed and used. When the insoluble dietary fibers derived from natural materials are used, the insoluble dietary fibers contained in one or more natural materials may be used after isolation/purification, or the natural materials containing insoluble dietary fibers may be used as they are.

In the present invention, a modified Prosky method is used as the method for measuring the insoluble dietary fiber content in the solid food composition, and the measurement is performed in accordance with the method described in the "Food Labelling Standards (Cabinet Office Ordinance, No. 10, 2015)" and the "Analytical Manual for the Standard Tables of Food Composition in Japan, 2015 (Seventh Revised Edition)".

### [Foodstuff containing insoluble dietary fibers]

The solid food composition of the present invention contains the foodstuff containing insoluble dietary fibers. The content thereof is determined such that the lower limit of the ratio of the total dry mass of the edible part and the insoluble dietary fiber localized site (in particular, inedible part) of the foodstuff containing insoluble dietary fibers with respect to the total mass of the solid food composition may be 5 mass% or more, from the viewpoint of achieving both chewy texture and easiness in biting off. Above all, it is preferred to contain 6 mass% or more, further preferably 10 mass% or more, and particularly preferably 15 mass% or more. The upper limit of the aforementioned ratio is 95 mass% or less. Above all, it is preferred to be 90 mass% or less, further preferably 80 mass% or less, further preferably 70 mass% or less, and particularly preferably 60 mass% or less.

Examples of the kind of foodstuff containing insoluble dietary fibers include vegetable foodstuffs, microbial foodstuffs, and animal foodstuffs. Any of them may be used, but vegetable foodstuffs are preferred from the viewpoint of achieving both chewy texture and easiness in biting off. Examples of the vegetable foodstuffs include, but are not limited to, nuts, grains, pulses, vegetables, potatoes, and fruits. These foodstuffs may be used alone or in combination of two or more. These foodstuffs may be used as they are, or may be used after various treatments (e.g., drying, heating, harshness removal, peeling, seed removal, ripening, salting, and pericarp processing). The classification of a foodstuff can be determined based on the state of the whole plant including the inedible part.

The kind of nuts is not limited, as long as the edible part and/or the insoluble dietary fiber localized site thereof contain insoluble dietary fibers. Examples thereof include, but are not limited to, almond, hemp, linseed, perilla, cashew nut, pumpkin seed, Japanese torreya, ginkgo, chestnuts, walnut, poppy, coconut, sesame, sweet acorn, Japanese horse chestnut, lotus seed, water chestnut, pistachio, sunflower seed, Brazil nut, hazelnut, pecan, macadamia nut, pine, peanut. Among them, almond, cashew nut, macadamia nut, pistachio, hazelnut, coconut, and the like are preferred, and almond, cashew nut, and hazelnut are further preferred.

The kind of grains is not limited, as long as the edible part and/or the insoluble dietary fiber localized site thereof contain insoluble dietary fibers. Examples thereof include, but are not limited to, amaranth, foxtail millet, oat, barley, proso millet, quinoa, common wheat, rice, sugar cane, buckwheat, corn (maize), Job's tears, Japanese barnyard millet, fonio, and sorghum. Among them, corn is preferred, and sweetcorn is particularly preferred.

The kind of pulses is not limited, as long as the edible part and/or the insoluble dietary fiber localized site thereof contain insoluble dietary fibers. Examples thereof include, but are not limited to, kidney bean, runner bean, red bean, soybean (in particular, green soybean), pea (in particular, green pea), pigeon pea, mung bean, cow pea, adzuki bean, broad bean, black bean, chickpea, Lens culinaris, hiramame, peanut, lupin bean, grass pea, locust bean, coffee bean, and cocoa bean. Among them, soybean (in particular, green soybean), pea (in particular, green pea), black bean, and the like are preferred, and soybean (in particular, green soybean) and pea (in particular, green pea) are particularly preferred. Green soybean is a soybean which is harvested with pods in an unripe state without drying before harvesting, and whose bean exhibits a green appearance. As the insoluble dietary fiber localized site (inedible part), one being not dried before harvesting is more preferred than soybean which is dried until its color changes before harvesting, from the viewpoint of nutritional value, and particularly when the inedible part is used, green soybean is preferably used.

The kind of vegetables is not limited, as long as the edible part and/or the insoluble dietary fiber localized site thereof contain insoluble dietary fibers. Examples thereof include, but are not limited to, artichoke, chive, Angelica, asparagus, aloe, uri, kidney bean, udo, pea sprout, podded pea, snap pea, okra, turnip, pumpkin, Karashina, cauliflower, chrysanthemum, cabbage, cucumber, Japanese victory onion, water morning glory, watercress, arrowhead, kale, burdock, komatsuna, zha cai, sweet pepper, shiso, cow pea, crown daisy, ginger, zuiki, sugukina, zucchini, water dropwort, celery, tatsoi, Japanese radish, leaf mustard, bamboo shoot, onion, chicory, bok choy, chili, tomato, eggplant, nabana, bitter melon, Chinese chive, carrot, nozawana, Chinese cabbage, pak choi, basil, parsley, table beet (beetroot), green pepper, Japanese butterbur, broccoli, luffa, spinach, horseradish, mizuna, Japanese honewort, Japanese ginger, bean sprout, cucumber, mulukhiya, lily bulb, mugwort, rakkyo, rocket, rhubarb, lettuce, lotus root, shallot, wasabi, bracken, and herbs (coriander, sage, thyme, basil, oregano, rosemary, mint, lemongrass, and dill). Among them, carrot, pumpkin, cabbage, kale, paprika, table beet (beetroot), broccoli, spinach, onion, and tomato, and the like are preferred, and cabbage, paprika, spinach, and table beet (beetroot) are particularly preferred.

The kind of potatoes is not limited, as long as the edible part and/or the insoluble dietary fiber localized site thereof contain insoluble dietary fibers. Examples thereof include, but are not limited to, Jerusalem artichoke, konjac, sweet potato, taro, mizuimo, yatsugashira, potato, Japanese yam, ichoimo, Chinese yam, yamatoimo, jinenjo, daijo, cassava, yacon, taro, tashiroimo, purple sweet potato, and yam. Among them, sweet potato, purple sweet potato, and the like are preferred, and sweet potato is particularly preferred.

The kind of fruits is not limited, as long as the edible part and/or the insoluble dietary fiber localized site thereof contain insoluble dietary fibers. Examples thereof include, but are not limited to, acerola, avocado, apricot, strawberry, fig, Japanese apricot, citrus fruits (e.g., iyokan, Satsuma mandarin, orange, grapefruit, lime, and lemon), olive, persimmon, kiwi, guava, coconut, pomegranate, water melon, prune, cherry (e.g., black cherry), jujube, pineapple, blue honeysuckle, banana, papaya, loquat, grape, berry (e.g., blueberry, raspberry), mango, mangosteen, melon, peach, and apple. Among them, avocado, strawberry, berry, citrus fruits, mango, pineapple, grape, apple, and the like are preferred, and citrus fruits are particularly preferred.

### [Edible part and insoluble dietary fiber localized site (in particular, inedible part) of foodstuff containing insoluble dietary fibers]

The insoluble dietary fiber localized site in the present invention represents the site where the insoluble dietary fiber is localized in the whole foodstuff, specifically the site having an insoluble dietary fiber content proportion higher than that of the edible part in the foodstuff, and represents the site having an insoluble dietary fiber content proportion of more preferably 1.1 times or more, further preferably 1.2 times or more, further preferably 1.3 times or more, further preferably 1.4 times or more, further preferably 1.5 times or more, further preferably 1.6 times or more, further preferably 1.7 times or more, further preferably 1.8 times or more, further preferably 1.9 times or more, and most preferably 2.0 times or more higher than that of the edible part in the foodstuff in a dry state.

The insoluble dietary fiber localized site preferably has an insoluble dietary fiber content proportion of more than 10 mass%, further preferably more than 11 mass%, further preferably more than 12 mass%, further preferably more than 13 mass%, further preferably more than 14 mass%, further preferably more than 15 mass%, further preferably more than 16 mass%, further preferably more than 17 mass%, further preferably more than 18 mass%, further preferably more than 19 mass%, and further preferably more than 20 mass% in terms of dry mass. In the foodstuff containing insoluble dietary fibers which contains the insoluble dietary fiber localized site in the present invention, the lower limit of the proportion of the insoluble dietary fiber localized site with respect to the total mass of the whole foodstuff is preferably 3 mass% or more in a dry state. It is more preferably 5 mass% or more, and further preferably 9 mass% or more. On the other hand, the upper limit thereof is usually not limited, but may preferably be 70 mass% or less, more preferably 60 mass% or less, and further preferably 50 mass% or less. The insoluble dietary fiber localized site in the present invention may be a part of "the edible part" of the foodstuff described below (e.g., the seed coat part of vegetables, grains, pulses, or fruits; in particular, the seed coat part of pulses) or may be "the inedible part", but the insoluble dietary fiber localized site is preferably "the inedible part". Specific examples thereof are shown in Table 1.

In the present invention, "the inedible part" of the edible plant represents the part of the edible plant which is usually not suitable for drinking and eating, or the part which is to be disposed of in usual dietary habits, and "the edible part" represents the part excluding the disposal part (inedible part) from the whole edible plant. Particularly in the case of the edible plant containing a thick dietary fiber layer, a trichome, or the like, the part containing the thick dietary fiber layer, the trichome, or the like conventionally has many parts that are not available for eating and to be disposed of due to bad ingestion and bad compatibility with other foods. In the present invention, the inedible part containing such a thick dietary fiber layer, a trichome, or the like can be suitably used.

In the edible plant used in the present invention, the edible part and the insoluble dietary fiber localized site (in particular, the inedible part) thereof may be derived from different kinds of edible plants, but it is preferred to contain the edible part and the insoluble dietary fiber localized site (in particular, the inedible part) derived from the same kind of edible plant, from the viewpoint of uniformity of flavor. Furthermore, it is preferred to contain the edible part and the insoluble dietary fiber localized site (in particular, the inedible part) derived from the same edible plant individual. That is, the use of a part or the whole of the edible part and a part or the whole of the insoluble dietary fiber localized site (in particular, the inedible part) derived from the same edible plant individual enables to utilize such an edible plant without waste and to eat the insoluble dietary fiber localized site (in particular, the inedible part) deliciously because the insoluble dietary fiber localized site (in particular, the inedible part) has a strong characteristic aroma inherent in the edible plant.

Examples of the inedible part of the edible plant include skin, seed, core, and draff of the above-mentioned various edible plants. Among them, since rich nutrients remain in the skin, seed, core, draff, and the like of, corn (in particular, sweetcorn), paprika, pumpkin, table beet (beetroot), broccoli, spinach, carrot, kale, soybean (in particular, green soybean), pea (in particular, green pea), broad bean, tomato, rice, onion, cabbage, apple, grape, sugar cane, citrus fruits (e.g., orange, Satsuma mandarin, and yuzu), they can be suitably used in the present invention, without limitation. Specific examples of the inedible part of the edible plant include, but are not limited to, bract, pistil, and cob (core) of corn (e.g., sweetcorn); seed and calyx of paprika; seed and pith of pumpkin; skin of table beet (beetroot); stem and leaf of broccoli; plant foot of spinach; root tips and petiole base of carrot; petiole base of kale; pod of soybean (green soybean); pod of pea (green pea); seed coat and pod of broad bean; skin and both ends of sweet potato; calyx of tomato; rice hull of rice (unhulled rice); skin (protective leaf), bottom part, and head part of onion; core of cabbage; core of apple; pericarp and seed of grape; draff of sugar cane; and skin, seed, and pith of citrus fruits (e.g., orange, Satsuma mandarin, and yuzu). Among them, cob (core) of corn; pod of soybean (green soybean); pod of pea (green pea); core of cabbage; both ends of sweet potato; seed or calyx of paprika; skin of table beet (beetroot); plant foot of spinach; skin, seed, core, and draff of citrus fruits (e.g., orange, Satsuma mandarin, and yuzu); and the like are preferred. Those not containing any components harmful to the human body to a degree that affect the human body are preferred.

The site and the ratio of the inedible part in the edible plant used in the present invention can be naturally understood by those skilled in the art who handle the food or processed food products. For example, the "disposal part" and the "wastage rate" described in the "Standard Tables of Food Composition in Japan, 2015 (Seventh Revised Edition)" can be referred to and considered as the site and the ratio of the inedible part, respectively. The following Table 1 shows examples of the edible plant and the "disposal part" and the "wastage rate" (i.e., the site and ratio of the inedible part) described in the "Standard Tables of Food Composition in Japan, 2015 (Seventh Revised Edition)" with respect to the edible plant.

**[Table 1]**

| Edible plant | Insoluble dietary fiber localized site (site of inedible part) (Disposal part) | Proportion of insoluble dietary fiber localized site (inedible part) (Wastage rate) |
|---|---|---|
| Vegetables/green soybean/raw | Pod | 45% |
| Vegetables/(corns)/sweetcorn/immature seed, raw | Bract, pistil, and cob | 50% |
| Vegetables/(green peppers)/red green pepper/fruit, raw (paprika) | Calyx, core, and seed | 10% |
| Vegetables/table beet/root, raw | Root tip, skin, and petiole | 10% |
| Vegetables/(cabbages)/cabbage/head-forming leaf, raw | Core | 15% |
| Vegetables/spinach/leaf, raw | Plant foot | 10% |
| Vegetables/(peas)/green pea/raw | Pod | 55% |
| Vegetables/broad bean/immature bean/raw | Seed coat, pod | 80% |
| Potatoes and starches/sweet potato/tuberous root/raw | Skin and both ends | 10% |
| Fruits/(oranges)Valencia orange/juice sacs/raw | Pericarp, pulp segments, and seeds | 40% |

In the present invention, the lower limit of {insoluble dietary fiber localized site/(edible part + insoluble dietary fiber localized site)} of the foodstuff containing insoluble dietary fibers is preferably 1 mass% or more, from the viewpoint of achieving both chewy texture and easiness in biting off. It is above all preferably 2 mass% or more, further preferably 3 mass% or more, further preferably 5 mass% or more, and particularly preferably 8 mass% or more. The upper limit is not particularly limited, but is more preferably 80 mass% or less, above all preferably 70 mass% or less, and particularly preferably 60 mass% or less.

### [Moisture]

The solid food composition of the present invention contains moisture. The moisture in the solid food composition of the present invention may be derived from various components of the above-mentioned solid food composition, or may be further added as water. In the present invention, the moisture content of the solid food composition means the total amount of the moisture amount derived from various components in the solid food composition and the moisture amount separately added, and the moisture content means the moisture content based on wet mass. The proportion of nonvolatile components such as dietary fibers represents the dry mass proportion, unless otherwise specified.

Specifically, the mass ratio of the moisture to the total solid food composition is less than 30 mass%. It is above all preferably less than 25 mass%, in particular, more preferably less than 20 mass%, more preferably less than 15 mass%, and most preferably less than 10 mass%. Setting the mass ratio of the moisture content with respect to the total solid food composition to the upper limit value or less is preferred from the viewpoint of easy processing before forming and improving shelf-life. On the other hand, the lower limit value of the mass ratio of the moisture content is not limited, but is preferably 0% by mass or more, and above all, it is convenient that the lower limit is 0.5 mass% or more, further preferably 1.0 mass% or more, further preferably 1.5 mass% or more, and particularly preferably 2.0 mass% or more.

The moisture content in the blend proportion of raw material before processing is preferably adjusted to less than 45 mass% because the texture of the solid food composition after processing becomes more chewy, and is further preferably less than 40 mass%, more preferably less than 35 mass%, more preferably less than 30 mass%, more preferably less than 25 mass%, particularly preferably less than 20 mass%, more preferably less than 15 mass%, and most preferably less than 10 mass%. Here, before processing refers to before manufacturing process of the solid food composition of the present invention and manufacturing dough by mixing raw materials. Specifically, it also refers to step (i) of the manufacture described below. After processing refers to obtaining a solid food composition after forming and drying the dough. Specifically, it refers to after step (ii) of the manufacture described below.

When the solid food composition of the present invention is manufactured, the raw material before processing (dough) is required to be dried, and the drying may be performed such that the lost difference between the water activity in the raw material before processing (dough) and the water activity in the solid food composition can be 0.001 Aw or more, or may be processed at ordinary temperature, or may be performed by other methods usually used.

Drying is preferably performed such that the difference before and after drying treatment between the moisture content in the blend proportion of raw material before processing (dough) and the moisture content in the solid food composition may be less than 30 mass% and the moisture content may be decreased because the texture of the solid food composition after processing becomes more chewy. The drying conditions such as temperature and time may be appropriately adjusted such that the difference in water activity before and after drying treatment and the difference in moisture content can take values in the defined range as mentioned above, and for the temperature during drying, the dough after forming is preferably dried at an ambient temperature less than 110°C, and more preferably dried less than 100°C. For the time during drying, drying is preferably performed less than 20 minutes, further preferably less than 15 minutes, and most preferably less than 10 minutes. The "blend proportion of raw material before processing (dough)" in the present invention represents the blend proportion of each raw material in the dough (mass%), provided that the solid composition after drying treatment is 100 mass%.

In the present invention, heat drying under reduced pressure is used as the method for measuring the moisture content, and the measurement is performed in accordance with the method described in the "Food Labelling Standards (Cabinet Office Ordinance, No. 10, 2015)".

### [Characteristics for particle size]

The solid food composition of the present invention contains the insoluble dietary fibers in the form of fine particles. Such fine particles may be formed from only one or more insoluble dietary fibers, or may be formed from one or more insoluble dietary fibers and one or more other components.

In the solid food composition of the present invention, a plurality of at least some of the above-mentioned fine particles containing insoluble dietary fibers is aggregated to form a complex which may be disintegrated by disturbance of the aqueous dispersion of the solid food composition. The solid food composition of the present invention can achieve both chewy texture at the time of eating and easiness in biting off (suppressing adhesion to the teeth) by containing the insoluble dietary fibers in such a complex state. In the present invention, ultrasonication of the aqueous dispersion of the solid food composition is envisaged as a typical example of the external disturbance which causes disintegration of the fine particle complex, unless otherwise stated. In the present invention, the "ultrasonication" refers to a treatment of applying ultrasonic waves having a frequency of 40 kHz to a measurement sample at an output of 40 W for 3 minutes, unless otherwise specified.

The solid food composition of the present invention can achieve both chewy texture at the time of eating and easiness in biting off (suppressing adhesion to the teeth) by containing the complex of fine particles containing insoluble dietary fibers and modulating various physical properties such as the particle size of such fine particles and the complex before and after adding disturbance to the aqueous dispersion of the solid food composition to the range described below. The reason thereof is unclear; however, a complex forms a characteristic shape as if a plurality of dietary fibers was gathered in the solid food composition, and this complex is considered to exert various effects.

In particular, the solid food composition of the present invention contains a fine particles complex having a large number of strong bindings which are relatively difficult to be disintegrated, in a state where no disturbance is applied to the aqueous dispersion thereof, i.e., in a state before performing ultrasonication, whereas a part or the whole of the fine particle complex is disintegrated to form a single fine particle in a state where disturbance is applied, i.e., in a state after ultrasonication is performed. Thus, various parameters for the particle size largely vary before and after ultrasonication, depending on the degree of disintegration.

The "particle size" in the present invention represents particle sizes all measured on the volumetric basis, unless otherwise specified. The "particle" in the present invention is a concept including not only a single fine particle, but also a fine particle complex formed by aggregating each single fine particle, unless otherwise specified.

### [Characteristics for 50% integrated diameter of particle size (d50)]

In the solid food composition of the present invention, the 50% integrated diameter of the particle size (appropriately referred to as "d50") after the disturbance of the aqueous dispersion of the solid food composition, i.e., after ultrasonication is adjusted within a predetermined range.

It is preferred to adjust the particle size d50 after ultrasonication within the predetermined range, from the viewpoint of the firmness of dough. When the dough is firm, the shape of the dough held in a hand at the time of eating can be retained and eating response can be further sensed. When the particle size d50 after ultrasonication is adjusted within the predetermined range, the dough is not too firm and can be adjusted to have moderate firmness, which is preferred. Specifically, the lower limit of the particle size d50 after ultrasonication is more than 5 µm. Above all, it is preferably more than 10 µm, further preferably more than 15 µm, and particularly preferably more than 30 µm. On the other hand, the upper limit of d50 after ultrasonication is 1,000 µm or less. Above all, it is preferably 800 µm or less, further preferably 600 µm or less, further preferably 500 µm or less, further preferably 450 µm or less, and particularly preferably 400 µm or less. The particle size d50 of the solid food composition is defined as the particle size at which the ratio between the cumulative value of particle frequency in % on the large side and the cumulative value of particle frequency in % on the small side is 50:50 when the particle size distribution of the solid food composition is divided into two from a certain particle size.

### [Characteristics for difference in cumulative frequency in % of particle size before and after ultrasonication]

In the solid food composition of the present invention, when a difference in cumulative frequency in % of the particle size of a 2 mass% aqueous dispersion of the solid food composition before and after ultrasonication (in the present invention, the difference represents a value obtained by subtracting the cumulative frequency in % in a range of 100 µm or more and 1,000 µm or less which is detected before disturbance, i.e., before ultrasonication from the cumulative frequency in % in the same range after disturbance, i.e., after ultrasonication) is within a certain range, the effects of the present invention are more significantly exerted. That is, the difference in cumulative frequency in % of the aqueous dispersion of the solid food composition in a range of 100 µm or more and 1,000 µm or less before and after ultrasonication is preferably within ±30% (which means -30% or more and 30% or less), because a sufficiently strong complex is formed and the effects of the present invention are more significantly exerted. The upper limit of the difference is more preferably 25% or less, above all, more preferably 20% or less, even more preferably 15% or less, even more preferably 10% or less, even more preferably 5% or less, even more preferably 3% or less, even more preferably 1% or less, and particularly more preferably 0% or less. The lower limit of the difference is more preferably -25% or more, above all, more preferably -20% or more, even more preferably -15% or more, and particularly more preferably -10% or more. The difference is preferably within ±25%, more preferably within ±20%, further preferably within ±15%, and further preferably within ±10%. The cumulative frequency in % of the 2 mass% aqueous dispersion of the solid food composition before ultrasonication in a range of 100 µm or more and 1,000 µm or less is preferably 1% or more, and the cumulative frequency in % of the 2 mass% aqueous dispersion after ultrasonication in a range of 100 µm or more and 1,000 µm or less is more preferably 1% or more.

### [Characteristics for maximum particle size]

In the solid food composition of the present invention, the maximum particle size after disturbance, i.e., after ultrasonication of the aqueous dispersion of the solid food composition is preferably included within a predetermined range because the dough becomes not too firm and hard, and an airy texture can be imparted. Specifically, the lower limit of the maximum particle size of the aqueous dispersion of the solid food composition of the present invention after disturbance, i.e., after ultrasonication is preferably 300 µm or more, above all preferably 400 µm or more, further preferably 500 µm or more, further preferably 600 µm or more, further preferably 700 µm or more, further preferably 800 µm or more, further preferably 900 µm or more, and particularly preferably 1,000 µm or more. On the other hand, the upper limit of the maximum particle size of the aqueous dispersion of the solid food composition of the present invention after disturbance, i.e., after ultrasonication is, without limitation, preferably 2,000µm or less, and above all preferably 1,800 µm or less.

### [Measurement method for particle size]

The particle size of the dispersion of the solid food composition of the present invention after disturbance, i.e., after ultrasonication is measured by the following conditions. First, the solvent used in the measurement is preferably the distilled water which hardly affects the structure of the sample in the measurement of the solid food composition described below. That is, the dispersion of the solid food composition is preferably an aqueous dispersion of the solid food composition. The laser diffraction particle size distribution analyzer used for the measurement is a laser diffraction particle size distribution analyzer having a measurement range of at least from 0.02 µm to 2,000 µm by a laser diffraction scattering method. For example, Microtrac MT3300 EX2 system of MicrotracBEL Corporation is used, and as the measurement application software, for example, DMSII (Data Management System version 2, MicrotracBEL Corporation) is used. When the measurement apparatus and the software above are used, the measurement may be performed by pressing down the washing button of the software to implement washing, pressing down the Set zero button of the software to implement zero adjustment, and directly charging a sample by sample loading until the concentration of the sample falls within an appropriate range. For the sample before disturbance, i.e., the sample not subjected to ultrasonication, the concentration is adjusted within the appropriate range in two times of sample loading after charging the sample, and immediately after the adjustment, laser diffraction is performed at a flow rate of 60% for a measurement time of 10 seconds, and the result thereof is used as the measured value. On the other hand, in the measurement of a sample after disturbance, i.e., a sample subjected to ultrasonication, ultrasonication is performed using the above measurement apparatus after charging the sample, followed by measurement. In this case, a sample not subjected to ultrasonication is charged, the concentration is adjusted within the appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. The parameters at the time of measurement are, for example, distribution display: volume, particle refractive index: 1.60, solvent refractive index: 1.333 (water), upper limit of measurement (µm) = 2,000.00 µm, and lower limit of measurement (µm) = 0.021 µm.

For the sample in the measurement of the particle size of the solid food composition of the present invention, a solution (2 mass% aqueous dispersion) obtained by immersing 1 g of the solid food composition sample in 50 g of distilled water at about 80°C, allowing to stand still for about 5 minutes, and thereafter, vigorously stirring with a spatula, suspending, and passing through a 7.5 mesh sieve having an opening of 2.36 mm and a wire diameter of 1.0 mm according to the new JIS is used, unless otherwise specified.

In the determination of various particle sizes of the solid food composition of the present invention, it is determined by measuring the particle size distribution at each channel (CH) and using the particle size of the measurement channel listed in Table 2 described below as the standard. Specifically, the particle frequency in % of each channel (which is also referred to as "particle frequency in % for XX channel") is determined by measuring the frequency of particles which are not larger than the particle size specified for each of the channels shown in Table 2 below and larger than the particle size (in the channel largest in the measurement range, measurement lower limit of particle size) specified for the channel of a larger number by one for each channel listed in Table 2 described below and using the total frequency of all channels within the measurement range as the denominator. For example, the particle frequency in % of channel 1 represents the frequency in % of particles having sizes of 2,000.00 µm or less and higher than 1,826.00 µm. In particular, for the maximum particle size, the particle size of the channel having the largest particle size can be determined as the maximum particle size among the channels whose particle frequencies in % are recognized, from the results obtained by measuring the particle frequency in % for each of the 132 channels in Table 2 described below. In other words, in the measurement of the maximum particle size of the solid food composition by using a laser diffraction particle size distribution analyzer in the present invention, the measurement conditions thereof include measuring the particle size of an object having an upper limit of measurement of 2,000.00 µm and a lower limit of measurement of 0.021 µm using distilled water as a measuring solvent, immediately after charging the sample.

**[Table 2]**

| Channel | Particle size (µm) | Channel | Particle size (µm) | Channel | Particle size (µm) | Channel | Particle size (µm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

### [Specific surface area of particles in solid food composition]

It is considered that the solid food composition of the present invention more significantly exerts the effects of the present invention by containing a strong insoluble dietary fiber structure to such an extent as not disintegrating after ultrasonication of the aqueous dispersion thereof. Specifically, when the above-mentioned structure is larger than a certain particle size, the specific surface area of the aqueous dispersion of the solid food composition after ultrasonication decreases as compared with that before ultrasonication, and when the numerical value is not larger than a certain value, the effects of the present invention are more significantly exerted, which is more preferred. That is, the difference in specific surface area per unit volume (m²/mL) (it represents a value (yA - yB) obtained by subtracting the specific surface area before ultrasonication (yB [m²/mL]) from the specific surface area after ultrasonication (yA [m²/mL]) in the present invention) before and after ultrasonication of the aqueous dispersion (2 mass% aqueous dispersion of the solid food composition) obtained by dispersing 1 part by mass of solid food composition in 50 times as much water and then removing extraneous components having 2,000 µm or more is preferably 0.5 m²/mL or less because fine particles form a sufficiently strong complex and the effects of the present invention are sufficiently exerted. The upper limit of the difference (yA - yB) is above all preferably 0.45 m²/mL or less, further preferably 0.4 m²/mL or less, further preferably 0.35 m²/mL or less, further preferably 0.3 m²/mL or less, further preferably 0.25 m²/mL or less, and particularly preferably 0.2 m²/mL or less. The lower limit of the difference (yA - yB) is not particularly limited, but is usually preferably in a range of 0.01 m²/mL or more.

In the solid food composition of the present invention, the upper limit of the specific surface area per unit volume (yA) of the 2 mass% aqueous dispersion after ultrasonication is preferably 0.5 m²/mL or less, above all preferably 0.45 m²/mL or less, further preferably 0.4 m²/mL or less, further preferably 0.35 m²/mL or less, further preferably 0.3 m²/mL or less, further preferably 0.25 m²/mL or less, and particularly preferably 0.2 m²/mL or less. The lower limit of the specific surface area (yA) of the solid food composition 2 mass% aqueous dispersion is not particularly limited, but is usually preferably in a range of 0.01 m²/mL or more, further preferably in a range of 0.05 m²/mL or more, and most preferably in a range of 0.09 m²/mL or more.

In the present invention, the specific surface area per unit volume (m²/mL) refers to the specific surface area per unit volume (1 mL) in the case of assuming that the particles measured using the above-mentioned laser diffraction particle size distribution analyzer are spherical. The specific surface area per unit volume in the case of assuming that the particles are spherical is a numerical value based on the measurement mechanism which is different from that of the measured value (the specific surface area per volume or per mass required in a transmission method, a gas adsorption method, etc.) reflecting the components, the surface structure, and the like of the particles. The specific surface area per unit volume in the case of assuming that the particles are spherical is determined by 6 × ∑(ai) ÷ ∑(ai.di), provided that the surface area per particle is ai and the particle size is di.

### [Minimum differential value of stress value at each strain%]

The differential value in the present invention refers to the proportion obtained by dividing the stress value difference (kN/m²) applied to a descending plate-like plunger by the strain ratio difference (%), in the stress measurement using a texture analyzer. Therefore, the state where the differential value is negative represents a tendency that the stress applied to the plunger (temporarily) decreases along with the descending of the plunger. This feature is recognized in the solid food composition having a discontinuous structure from near the surface of the solid food composition to the inside of the solid food composition.

That is, the solid food composition having an average value of the minimum differential value at a strain ratio of 30% or less of -900 kN/m²% or more is the solid food composition having a continuous structure at near the surface of the solid food composition and inside the solid food composition, and has problems of difficulty in biting off and easy adhesion to the teeth which are inherent in the composition having a chewy texture, and thus the present invention is useful. The lower limit of the average value of the minimum differential value at a strain ratio of 30% or less is above all preferably -800 kN/m²% or more, further preferably -700 kN/m²% or more, further preferably -600 kN/m²% or more, further preferably -500 kN/m²% or more, further preferably -400 kN/m²% or more, further preferably -300 kN/m²% or more, and particularly preferably -200 kN/m²% or more. Furthermore, the region in which the minimum differential value at a strain ratio of 30% or less is -900 kN/m²% or more (more preferably - 800 kN/m²% or more, further preferably -700 kN/m²% or more, further preferably -600 kN/m²% or more, further preferably -500 kN/m²% or more, further preferably -400 kN/m²% or more, above all preferably -300 kN/m²% or more, and particularly preferably -200 kN/m²% or more) preferably occupies 20% or more of the total surface of the solid food composition. Above all, the region preferably occupies 30% or more, further preferably 40% or more, further preferably 50% or more, further preferably 60% or more, further preferably 70% or more, further preferably 80% or more, further preferably 90% or more, and particularly preferably 100% or more.

The minimum differential value at a strain ratio of 30% or less refers to the minimum differential value obtained by continuously measuring the differential value while entering a plunger vertically to a distance of 30% (strain ratio 30%) from the upper part of the solid food composition toward the lower part (inside) of the solid food composition, provided that the vertically lower surface (bottom surface) of the solid composition in the measurement is 100%, and the upper surface (top surface) thereof is 0%.

To measure the proportion occupied by the region on the surface of the solid food composition, the surface of the solid food composition is partitioned for each appropriate size (any size may be used as long as the composition is not disintegrated, but more specifically, for 1 cm²), and each partition is measured, and then each measured value is averaged to obtain an average value. Also, in a solid food composition having a homogeneous surface composition, the measured site representative of the surface structure thereof may be used as the differential value of the whole region.

The surface of the solid food composition in the present invention represents a region where the solid food composition directly contacts with the outside air, and includes the vertically lower surface of the solid composition.

In the present invention, the method for measuring the minimum differential value at a strain ratio of 30% or less and a region where the minimum differential value at a strain ratio of 30% or less is -900 kN/m²% or more (more preferably -800 kN/m²% or more, further preferably -700 kN/m²% or more, further preferably -600 kN/m²% or more, further preferably -500 kN/m²% or more, further preferably -400 kN/m²% or more, above all preferably -300 kN/m²% or more, and particularly preferably -200 kN/m²% or more) is as follows. [Method 1] The surface of the solid food composition having a material temperature of 20°C vertically is pressed to a strain ratio of 30% at a descending speed of 1 mm/second by a plate-like plunger having a cross-sectional area of 5 mm² (1 mm in length × 5 mm in width) using a texture analyzer (RE2-3305C, manufactured by Yamaden Co., Ltd.), and the stress (kN/m²) is continuously measured at an interval of 0.1 seconds, then the stress value difference (kN/m²) between the strain ratios is divided by the strain ratio difference (%) to determine the differential value (kN/m²%) at each strain ratio (%). The differential value is calculated by measuring the stress value at an interval of 0.1 seconds. For example, in the case where the measured value (strain ratio Xi%, stress P1 (kN/m²)) at an arbitrary measurement time T1 second and the measured value (strain ratio Xii%, stress P2 (kN/m²)) at T1 + 0.1 seconds, the differential value at the strain ratio Xi% (measurement time T1 second) can be calculated by dividing the stress difference P2 - P1 (kN/m²) by the strain ratio difference Xii% - Xi%.

### [Average of maximum value of stress at each strain%]

While the solid food composition in which the average of the maximum value of the stress at a strain ratio of 30% or less is 8,000 kN/m² or less has a chewy texture, it strongly has a problem of difficulty in biting off the solid food composition. Since the solid food composition can have both a chewy texture and a texture easily bitten off according to the present invention, the technique of the present invention is more useful. The upper limit of the average value of the maximum value of the stress at a strain ratio of 30% or less is above all preferably 7,000 kN/m² or less, further preferably 6,000 kN/m² or less, further preferably 5,000 kN/m² or less, further preferably 4,000 kN/m² or less, further preferably 3,000 kN/m² or less, and particularly preferably 2,000 kN/m² or less. The lower limit is preferably 500 kN/m² or more, and further preferably 900 kN/m² or more.

Since the solid food composition in which a region where the maximum value of the stress at a strain ratio of 30% or less is 8,000 kN/m² or less (more preferably 7,000 kN/m² or less, further preferably 6,000 kN/m² or less, further preferably 5,000 kN/m² or less, further preferably 4,000 kN/m² or less, above all preferably 3,000 kN/m² or less, and further preferably 2,000 kN/m² or less) occupies 20% or more of the surface of the solid food composition strongly has the problems of the present invention, the technique of the present invention is further useful. Above all, it is preferred to occupy 30% or more, further preferably 40% or more, further preferably 50% or more, further preferably 60% or more, further preferably 70% or more, further preferably 80% or more, further preferably 90% or more, and particularly preferably 100%.

It is particularly preferred that the above-mentioned region of the minimum differential value at a strain ratio of 30% or less occupy the above defined range of the surface of the solid food composition, and the above-mentioned maximum value of the stress be within the defined range. That is, the solid food composition is preferably formed under pressurized conditions until the solid food composition has a region where the minimum differential value at a strain ratio of 30% or less is - 900 kN/m²% or more and the maximum stress is 8,000 kN/m² or less when the surface of the solid food composition is measured by Method 1, and the solid food composition is more preferably formed under pressurized conditions until the solid food composition has a region where the average of the minimum differential value at a strain ratio of 30% or less is -900 kN/m²% or more and the average of the maximum stress is 8,000 kN/m² or less when the surface of the solid food composition is measured by Method 1.

Here, the maximum stress at a strain ratio of 30% or less represents the maximum value of the stress obtained in the same manner as the above-mentioned measurement of the minimum differential value. To measure the proportion occupied by the region of the minimum differential value at a strain ratio of 30% or less on the surface of the solid food composition, for example, the surface of the solid food composition is partitioned for each appropriate size (any size may be used as long as the composition is not disintegrated during measurement, but more specifically, for 1 cm²), and each partition is measured to perform the measurement, and then, each measured value is averaged to obtain an average value. Also, in a solid food composition having a homogeneous surface composition, the measured site representative of the surface structure thereof may be used as the differential value of the whole region.

### [Protein]

In the present invention, the protein content in the solid food composition is preferably 2 mass% or more, from the viewpoint of achieving both chewy texture and easiness in biting off. Above all, the lower limit is preferably 3 mass% or more, and even more preferably 4 mass% or more. The upper limit is not particularly limited, but is usually preferably 20 mass% or less, and above all preferably 15 mass% or less. Here, the protein contained in the solid food composition of the present invention is preferably vegetable protein.

As a method for measuring the protein content in the solid food composition of the present invention, common methods can be used. Specifically, the measurement is performed using the Kjeldahl method-method for nitrogen-to-protein conversion in accordance with the method described in the "Analytical Manual for the Standard Tables of Food Composition in Japan, 2015 (Seventh Revised Edition)".

### [Carbohydrate]

The solid food composition of the present invention contains one or more carbohydrates. The carbohydrate may be derived from a raw material such as a foodstuff, or one or more carbohydrates may be separately added to the solid composition. In the case where the carbohydrate is added to the food composition, examples of the kind of carbohydrate include, but are not limited to, saccharides (glucose, sucrose, fructose, glucofructose syrup, and fructoglucose syrup), sugar alcohols (xylitol, erythritol, and maltitol), starches, and starch degradation products. Examples thereof also include foodstuffs containing carbohydrates such as juice derived from plants (including fruit juice) which contain these saccharides or sap, purified products thereof, and concentrated products thereof. Above all, the foodstuff containing carbohydrates, the purified product thereof, the concentrated product thereof, and the like are preferred, from the viewpoint that the sweetness inherent in food materials are likely to be felt. Specific examples of the foodstuff containing carbohydrates include fruit juice of fruits, date syrup, sugar cane, maple, and honey. The foodstuff containing carbohydrates is preferably contained in an amount of 5 mass% or more in terms of monosaccharides in the blend proportion of raw material before processing (dough) because the moldability of the solid food composition is improved, and further preferably 10 mass% or more, further preferably 15 mass% or more, further preferably 20 mass% or more, and further preferably 25 mass% or more. The state where the foodstuff containing carbohydrates is substantially uniformly dispersed throughout the entire solid food composition is preferred because the moldability is further improved, and the foodstuff containing carbohydrates is most preferably a foodstuff containing the carbohydrate in a state dissolved in water (e.g., date fruit juice).

The carbohydrate content in the solid food composition of the present invention is preferably such that the lower limit of the total content in terms of monosaccharides in the total solid food composition is 10 mass% or more because the moldability of the solid food composition is improved. Above all, it is preferably 15 mass% or more, further preferably 20 mass% or more, and especially, most preferably 25% or more. The upper limit of the carbohydrate content in the total solid food composition of the present invention is usually preferably 75 mass% or less, above all preferably 72 mass% or less, further preferably 70 mass% or less, and particularly further preferably 60 mass% or less, in terms of monosaccharides.

The carbohydrate fraction in the blend proportion of raw material before processing (dough) is preferably such that the lower limit of the total content in terms of monosaccharides is 10 mass% or more because the moldability of the solid food composition is improved. It is above all preferably 15 mass% or more, further preferably 20 mass% or more, and especially, most preferably 25 mass% or more. The upper limit of the total content in terms of monosaccharides in the blend proportion of raw material before processing of the present invention is usually preferably 75 mass% or less, above all preferably 72 mass% or less, further preferably 70 mass% or less, and particularly preferably 60 mass% or less. Furthermore, both the moisture content and the carbohydrate fraction in the above-mentioned blend proportion of raw material before processing are preferably adjusted in the defined range because the moldability of the solid food composition is further enhanced.

In the present invention, the amount in terms of monosaccharides is measured by the phenol sulfuric acid method-absorptiometry.

In the present invention, the sucrose content in the solid food composition may be derived from a raw material such as a foodstuff, or one or more of refined sucrose (e.g., sugar) may be separately added to the solid food composition. The total content thereof in the total solid food composition is preferably less than 50 mass%, from the viewpoint of the taste. The upper limit is above all preferably less than 40 mass%, further preferably less than 30 mass%, and particularly preferably less than 20 mass%. The lower limit is not particularly limited, but is usually preferably 0 mass% or more, and more preferably 0.1 mass% or more. It is further preferred to contain no refined sucrose.

As a method for measuring the sucrose content in the solid food composition of the present invention, common methods can be used. Specifically, the measurement is performed using the high-performance liquid chromatography in accordance with the method described in the "Food Labelling Standards (Cabinet Office Ordinance, No. 10, 2015)" and the "Analytical Manual for the Standard Tables of Food Composition in Japan, 2015 (Seventh Revised Edition)".

### [Other components]

The solid food composition of the present invention may contain one or more other components in addition to the aforementioned various components. Examples of other components include seasonings, fats/oils, food additives, nutrient components, and binders.

Examples of seasonings and food additives include soy sauce, miso paste, alcohols, sodium chloride, artificial sweeteners (e.g., sucralose, aspartame, saccharin, and acesulfame K), minerals (e.g., zinc, potassium, calcium, chrome, selenium, iron, copper, sodium, magnesium, manganese, iodine, and phosphorus), fragrances, spices, pH adjusters (e.g., sodium hydroxide, potassium hydrate, lactic acid, citric acid, tartaric acid, malic acid, and acetic acid), dextrin, cyclodextrin, antioxidants (e.g., tea extract, green coffee bean extract, chlorogenic acid, spice extract, coffeic acid, rosemary extract, rutin, quercetin, bayberry extract, and sesame extract), emulsifiers (e.g., glycerin fatty acid ester, saponin, sucrose fatty acid ester, and lecithin), colorants, and thickening stabilizers.

The solid composition of the present invention may contain one or more fats/oils. When it contains two or more fats/oils, the combination of two or more fats/oils or the ratio among them is arbitrary. Examples of the kind of fat/oil include edible fats/oils, various fatty acids, and foods using the edible fats/oils as a raw material, but edible fats/oils are preferably used. The edible fat/oil may be the fat/oil contained in the foodstuff, but another edible fat/oil different from the foodstuff is preferably added because it is more compatible with the foodstuff. When another edible fat/oil different from the foodstuff is added, its amount used is preferably adjusted such that another edible fat/oil different from such a foodstuff can occupy 10 mass% or more, above all 30 mass% or more based on the total fat/oil content in the food composition. The "total fat/oil content" in the present invention represents the mass ratio of the total fat/oil content in the composition (i.e., the total fat/oil content including not only the fats/oils blended during preparation of the composition, but also the fats/oils contained in a food as a raw material or other optional components) to the total composition.

Specific examples of the edible fat/oil include sesame oil, rape oil, high oleic rapeseed oil, soybean oil, palm oil, cotton oil, corn oil, sunflower oil, high oleic sunflower oil, safflower oil, olive oil, flax oil, rice oil, camellia oil, perilla oil, flavor oil, coconut oil, grapeseed oil, peanut oil, almond oil, avocado oil, cocoa butter, salad oil, canola oil, or MCT (medium chain fatty acid triglyceride), diglyceride, hardened oil, transesterification oil, and animal fats/oils such as milk fat and beef tallow. In particular, liquid edible fats/oils such as sesame oil, olive oil, rape oil, soybean oil, sunflower oil, rice oil, coconut oil, and palm oil are preferred, and olive oil, coconut oil, and rape oil are more preferred, from the viewpoint of flavor. Specific examples of the food using various fatty acids as a raw material include butter, margarine, shortening, raw cream, and soymilk cream (for example, "Ko-cream" (R) manufactured by Fuji Oil Co., Ltd.).

Examples of nutrient components include vitamins (e.g., niacin, pantothenic acid, biotin, vitamin A, vitamin B1, vitamin B2, vitamin B6, vitamin B12, vitamin C, vitamin D, vitamin E, vitamin K, and folic acid); animal proteins derived from livestock meat, milk, and egg; vegetable proteins derived from soybean and grains; lipids (n-3 fatty acids such as α-linolenic acid, EPA, and DHA, n-6 fatty acids such as linoleic acid and arachidonic acid); and functional components such as dietary fiber and polyphenol.

However, it is preferred that the solid food composition of the present invention contain substantially no binder. Examples of binders include foodstuffs containing animal proteins such as egg and milk, and extracts thereof; orthophosphate such as monosodium phosphate and dipotassium phosphate; and polymerized phosphate such as sodium polyphosphate and sodium metaphosphate. The solid food composition of the present invention can obtain the effect of suppressing scattering at the time of eating without using these binders. It is desired to suppress the use of such a binder also from the viewpoint of providing a quality which satisfies health conscious consumers. In particular, since egg and/or milk are/is the specific raw material defined in the "Food Labeling Standards (Cabinet Office Ordinance, No. 10, 2015)" and they are also defined as an allergen in other countries, a configuration containing substantially no egg or a configuration containing substantially no milk is preferred, and a configuration containing substantially neither egg nor milk is most preferred, from the viewpoint of consumers which desire no use of allergen. In this case, "containing substantially no" refers to not containing in an amount which effects as an allergen, for example, it refers to not containing the total protein amount of the specific raw material which is an object to be listed in the "Food Labeling Standards (Cabinet Office Ordinance, No. 10, 2015)" in Japan.

Specifically, in the solid food composition of the present invention, the content of the binder, in particular, the content of components derived from egg and/or milk is preferably 5% by mass or less, above all preferably 3% by mass or less, further preferably 1% by mass or less, and particularly preferably substantially 0% by mass based on the total solid food composition. In the present invention, examples of components derived from egg and/or milk include, egg and/or milk in Appendix 1 of the "Labeling of Foods Containing Allergens" attached to the "Food Labeling Standards" (Disposal Table No. 139), and specific examples thereof include chicken egg; avian eggs such as eggs from ducks or quails; processed products of chicken eggs; milk such as raw milk, cow milk, and processed milk; dairy products such as cream, butter, cheese, ice cream, condensed milk, powdered milk, powdered milk, cream powder, whey powder, fermented milk, lactic acid bacteria beverage, and milk drink; and food products containing milk or dairy products as a main raw material.

It is preferred that the solid food composition of the present invention substantially do not contain one or more components selected from the group consisting of an emulsifier, a colorant, and a thickening stabilizer which are so-called food additives (e.g., those described as "colorant", "thickening stabilizer", and "emulsifier" in the "Table of food additive names for indication" of the Food Additives Indication Pocket Book (2011)). The solid food composition of the present invention can improve the firmness of the dough and suppress scattering at the time of eating without using the colorant, thickening stabilizer, emulsifier, or the like. It is desired to suppress the use of such a colorant, thickening stabilizer, and emulsifier also from the viewpoint of providing a quality which satisfies health-conscious consumers.

In the solid food composition of the present invention, specifically, the content of any one of the colorant, thickening stabilizer, and emulsifier as the food additive in the solid food composition of the present invention is preferably 5 mass% or less, above all preferably 3 mass% or less, further preferably 1 mass% or less, and particularly substantially preferably 0 mass% based on the total solid food composition, from the viewpoint of providing a quality which satisfies health-conscious consumers.

It is especially desired that the solid food composition of the present invention contain substantially no food additive (e.g., substances described in the "Table of food additive names for indication" of the Food Additives Indication Pocket Book (2011) used as food additive applications) from the viewpoint of providing a quality which satisfies health-conscious consumers. Specifically, in the solid food composition of the present invention, the content of the food additive is preferably 5% by mass or less, above all preferably 3% by mass or less, further preferably 1% by mass or less, and particularly preferably substantially 0% by mass based on the total solid food composition.

### [Water activity]

In the present invention, the foodstuff containing insoluble dietary fibers having a water activity value within a predetermined range is preferably used, from the viewpoint of storage properties. Specifically, the water activity value of the foodstuff containing insoluble dietary fibers is preferably 0.95 or less, above all preferably 0.9 or less, further preferably 0.8 or less, and particularly preferably 0.65 or less. The water activity value of commonly used fruits or vegetables may be higher than the upper limit value in many cases, and thus, when such a foodstuff is used as the foodstuff containing insoluble dietary fibers, the drying treatment described below is preferably performed in advance and then used. On the other hand, the lower limit of the water activity value of the foodstuff containing insoluble dietary fibers is not particularly limited, but is preferably 0.10 or more, above all preferably 0.20 or more, further preferably 0.30 or more, and particularly preferably 0.40 or more. The water activity value of a foodstuff is measured using a general water activity measuring device in accordance with a common method.

### [Other foodstuffs]

The solid food composition of the present invention may contain other foodstuffs in addition to the foodstuff containing insoluble dietary fibers. Here, other foodstuffs specifically refer to foodstuffs or ingredients having a particle size larger than 2,000 µm (2 mm) that are not to be the measurement object of a laser diffraction particle size distribution measurement. Examples of such other foodstuffs include vegetable foodstuffs, microbial foodstuffs, and animal foodstuffs, and any of them may be used. These foodstuffs may be used alone or in combination of two or more.

These foodstuffs may be used as they are, or may be used after various treatments (e.g., drying, heating, harshness removal, peeling, seed removal, ripening, salting, and pericarp processing).

### [Method for manufacturing solid food composition]

The method for manufacturing the solid food composition of the present invention is arbitrary, and it is only required to mix the foodstuff containing insoluble dietary fibers arbitrary with other foodstuffs, fats/oils, carbohydrates, and/or other components in an appropriate ratio while adjusting so as to achieve the aforementioned various characteristics.

However, a foodstuff subjected to drying treatment in advance, i.e., a dried foodstuff is preferably used as the foodstuff containing insoluble dietary fibers and as other foodstuffs arbitrarily used, from the viewpoint of storage properties and flavor of the solid food composition. As the drying method of the foodstuff, an arbitrary method which is typically used in the drying of foods can be used. Examples thereof include sun drying, shade drying, freeze drying, air drying (e.g., hot air drying, fluidized bed drying method, spray drying, drum drying, and low temperature drying), pressure drying, vacuum drying, microwave drying, and oil heat drying. Among them, a method involving air drying (e.g., hot air drying, fluidized bed drying method, spray drying, drum drying, or low temperature drying), or freeze drying is preferred in view of a small degree of change in color tone or flavor inherent in the foodstuff and controlling the non-food aroma (e.g., burnt odor).

The foodstuff containing insoluble dietary fibers and other foodstuffs arbitrarily used are preferably one obtained by crushing in advance, from the viewpoint of easy production of the solid food composition. The means for crushing treatment is not particularly limited, and the temperature and the pressure during the treatment are also arbitrary. Examples of the apparatus for such crushing include equipment, such as a blender, a mixer, a mill, a kneader, a crusher, a disintegrator, and a grinder, and any of these may be used, and either dry crushing or wet crushing may be performed.

Furthermore, the present invention encompasses the following methods for manufacturing the solid food composition.

A method for manufacturing a solid food composition containing a foodstuff containing insoluble dietary fibers, including the following steps (i) to (ii):
(i) mixing and kneading a composition containing an edible part and an insoluble dietary fiber localized site of one or more foodstuffs containing insoluble dietary fibers, such that a content of the foodstuff is 5 mass% or more and 95 mass% or less in terms of total dry mass and an insoluble dietary fiber content is 3 mass% or more to manufacture dough;
(ii) forming the dough under pressurized conditions followed by drying until a maximum particle size of particles in an aqueous dispersion of the solid food composition after ultrasonication is 300 µm or more and an average of a minimum differential value measured by Method 1 is -900 kN/m²% or more to obtain a solid food composition.

The method for manufacturing the solid food composition, including in the above step (ii), forming the dough under pressurized conditions until the solid food composition has a region where a minimum differential value at a strain ratio of 30% or less is - 900 kN/m²% or more and a maximum stress is 8,000 kN/m² or less, when the surface of the solid food composition is measured by Method 1.

The method for manufacturing the solid food composition, including in the above step (ii), forming the dough under pressurized conditions such that a difference in cumulative frequency in % of the particle size of 100 µm or more and 1,000 µm or less of the particles in the aqueous dispersion of the solid food composition before and after ultrasonication is within +30%.

The method for manufacturing the solid food composition, including in the above step (ii), forming the dough under pressurized conditions such that a specific surface area per unit volume (m²/mL) of the particles in the aqueous dispersion of the solid food composition after ultrasonication is 0.5 or less.

The method for manufacturing the solid food composition, including in the above step (i), mixing and kneading the foodstuff such that a protein content is 2 mass% or more to manufacture the dough.

The method for manufacturing the solid food composition, including in the above step (i), mixing and kneading the foodstuff such that a sucrose content is less than 50 mass% to manufacture the dough.

The method for manufacturing the solid food composition, including in the above step (i), mixing and kneading the foodstuff so as to contain no egg and/or no milk to manufacture the dough.

The method for manufacturing the solid food composition, including in the above step (i), subjecting the foodstuff containing insoluble dietary fibers to drying treatment in advance.

The method for manufacturing the solid food composition, including in the above step (i), blending a crushed product of the edible part and the insoluble dietary fiber localized site of the foodstuff containing insoluble dietary fibers and a carbohydrate.

The method for manufacturing the solid food composition, including in the above step (i), adjusting the carbohydrate fraction in the blend proportion of raw material before processing (dough) such that a total content of the carbohydrate is 10 mass% or more.

The method for manufacturing the solid food composition, including in the above step (i), uniformly dispersing a foodstuff containing carbohydrates throughout the entire dough.

The method for manufacturing the solid food composition, including in the above step (i), incorporating the foodstuff containing carbohydrates which contains the carbohydrate in a state dissolved in water.

The method for manufacturing the solid food composition, including in the above step (i), incorporating the foodstuff containing carbohydrates in the blend proportion of raw material before processing (dough) of 5 mass% or more.

The method for manufacturing the solid food composition, including in the above step (i), adjusting the moisture in the blend proportion of raw material before processing (dough) so as to be less than 30 mass%.

The method for manufacturing the solid food composition, including in the above step (ii), drying the solid food composition after forming at a temperature less than 110°C.

The method for manufacturing the solid food composition, wherein in the above step (ii), drying is performed such that the difference in the moisture content before and after drying treatment is less than 30 mass%.

The details of the method for manufacturing the solid food composition are as described above. As the method for forming under the above-mentioned pressurized conditions, methods such as extrusion in which dough is continuously extruded while molding the dough by an extruder, a serial molding machine, or the like under pressurized conditions, or press molding in which dough is molded while pressurizing the dough charged into a mold can be suitably employed. Commonly used conditions can be employed as the pressurized conditions, and the lower limit is usually 0.01 MPa or more, and above all, more preferably 0.1 MPa or more. The upper limit is usually 100 MPa or less, and above all, more preferably 50 MPa or less.

### [Feature and applications of solid food composition]

The solid food composition of the present invention achieves both the chewy texture at the time of eating and the easiness in biting off (suppressing adhesion to the teeth). In addition, the dough has firmness, the shape of the dough held in a hand at the time of eating can be retained, and eating response can be sensed. Further preferably, the dough becomes not too firm and hard, and has an airy texture. The chewy texture of the solid food composition at the time of eating refers to physical properties of flexibly deforming while having shape retainability and a certain resilience when the solid food composition is bitten. These physical properties cause phenomenons of difficulty in biting off and easy adhesion to the teeth, whereas the solid food composition of the present invention has characteristics of achieving both chewy texture and easiness in biting off by containing the edible part and the insoluble dietary fiber localized site of the foodstuff containing insoluble dietary fibers.

The solid food composition of the present invention can be eaten as a food as it is, and it can also be suitably used as a part of a food/drink, or a part of a raw material or a food material such as liquid seasoning and solid seasoning. For example, the liquid seasoning such as sauce, baste, dipping sauce, mayonnaise, and dressing, the solid seasoning such as butter and jam, and the foods/drink such as salad, cooked rice with ingredients, bread, pizza, beverage, and confectionery can be manufactured. When the solid food composition of the present invention is used as a part of them like the above, the blend proportion thereof is not limited, but the blend proportion is desired to be about 0.001 to 50% by mass based on the total food/drink or the total raw material or the total food material such as liquid seasoning and solid seasoning. The solid food composition may be used at any timing, but a method of adding the solid food composition of the present invention is industrially convenient and thus preferred.

Furthermore, the present invention encompasses the following methods for manufacturing a food/drink, or a liquid or solid seasoning.

A method for manufacturing a food/drink, including incorporating the solid food composition of the present invention.

A method for manufacturing a liquid or solid seasoning, including incorporating the solid food composition of the present invention.

The details of these methods for manufacturing a food/drink or a liquid or solid seasoning are as described above.

### [Examples]

The present invention will now be described in more detail with reference to Examples, but these Examples are illustrative only for the convenience of description, and the present invention is not limited to these Examples in any sense.

### [Preparation of solid food composition sample]

The solid food composition samples of Comparative Examples 1 to 6 and Test Examples 1 to 15 were prepared using the materials shown in the following Table 3 to Table 6. Specifically, dried products of corn which is one kind of grains; table beet (beetroot), paprika, cabbage, spinach, and cauliflower which are one kind of vegetables; sweet potato which is one kind of potatoes; soybean (green soybean) and pea (green pea) which are one kind of pulses; and orange, pineapple, and mango which is one kind of fruits were subjected to drying treatment until the water activity values thereof reached at least 0.95 or less. Not only the part typically used for drinking and eating (the part other than the non-edible part) was used as the edible part of each foodstuff, but also core of corn, skin of table beet (beetroot), seed and calyx of paprika core of cabbage, plant foot of spinach, petiole base of kale, surface layer and both ends of sweet potato, pod of soybean (green soybean), pod of pea (green pea), pericarp of orange were used as the insoluble dietary fiber localized site (the inedible part) of some of the foodstuffs.

After materials such as ingredients such as quinoa puff and dice almond as well as foodstuffs containing carbohydrates such as date fruit juice and a fat/oil were appropriately mixed with each dried product obtained, according to the raw material blend proportion and kneading conditions shown in Table 3 to Table 6 to prepare dough, the mixtures were molded to have 5 mm in thickness, 10 cm in length, and 3 cm in width, and drying was performed under the conditions shown in Table 3 to Table 6 such that the lost difference between the water activity in the raw material before processing (dough) and the water activity in the solid food composition could be at least 0.001 Aw or more. The date fruit juice was concentrated by a kneader before mixing until it had a Brix of 75 to evaporate the moisture, and then mixed. In the kneading under pressure, squeezer II manufactured by FUJISEIKI CO., LTD was used as the squeezer, the single-screw extruder manufactured by SUEHIRO EPM CORPORATION was used as the extruder, and kneading under normal pressure was performed manually. The blend proportion of raw material before processing (dough) represents the blend proportion for each raw material (mass%) when the solid composition after drying treatment was determined as 100 mass%.

### [Calculation of foodstuff content of each solid food composition sample]

The content of the insoluble dietary fiber localized site (inedible part) of the edible plant {insoluble dietary fiber localized site (inedible part)/(edible part + insoluble dietary fiber localized site (inedible part))}, the content of the vegetable, grains, potatoes, and fruits, and the content of the pulses in each solid composition sample were determined by subtracting the moisture content measured for each of them from the blending ratio.

### [Measurement of content of components of solid food composition sample]

Each solid food composition sample was appropriately weighed, and the content of the insoluble dietary fibers was measured using the modified Prosky method in accordance with the method described in the "Food Labelling Standards (Cabinet Office Ordinance, No. 10, 2015)" and the "Analytical Manual for the Standard Tables of Food Composition in Japan, 2015 (Seventh Revised Edition)". The protein content was measured using the Kjeldahl method-method for nitrogen-to-protein conversion in accordance with the method described in the "Analytical Manual for the Standard Tables of Food Composition in Japan, 2015 (Seventh Revised Edition)". The total fat/oil content was measured using the chloroform-methanol mixture extracting method in accordance with the method described in the "Food Labelling Standards (Cabinet Office Ordinance, No. 10, 2015)". The moisture content was measured using the heat drying under reduced pressure in accordance with the method described in the "Food Labelling Standards (Cabinet Office Ordinance, No. 10, 2015)". The starch content was measured using a method in which soluble carbohydrates affecting measured values (e.g., glucose, maltose, and maltodextrin) were removed by 80% ethanol extraction treatment, in accordance with the method described in the "AOAC996.11". The sucrose content was measured using the high-performance liquid chromatography in accordance with the method described in the "Food Labelling Standards (Cabinet Office Ordinance, No. 10, 2015)" and the "Analytical Manual for the Standard Tables of Food Composition in Japan, 2015 (Seventh Revised Edition)". The amount in terms of monosaccharides was measured by the phenol sulfuric acid method-absorptiometry.

### [Measurement for minimum differential value of stress value at a strain ratio of 30% or less of solid food composition sample and for proportion of region where minimum differential value is -900 kN/m²% or more]

The surface of the solid food composition having a material temperature of 20°C was pressed to a strain ratio of 30% at a descending speed of 1 mm/second by a plate-like plunger having a cross-sectional area of 5 mm² (1 mm in length × 5 mm in width) using a texture analyzer (RE2-3305S, manufactured by Yamaden Co., Ltd.), the stress (kN/m²) was continuously measured at an interval of 0.1 seconds, then the stress value difference (kN/m²) between the strain ratios was divided by the strain ratio difference (%) to determine the differential value (kN/m²%) at each strain ratio (%) The differential value was calculated by measuring the stress value at an interval of 0.1 seconds. Specifically, in the case of the measured value (strain ratio Xi%, stress P1 (kN/m²)) at an arbitrary measurement time T1 second and the measured value (strain ratio Xii%, stress P2 (kN/m²)) at T1 + 0.1 seconds, the differential value at the strain ratio Xi% (measurement time T1 second) was calculated by dividing the stress difference P2 - P1 (kN/m²) by the strain ratio difference Xii% - Xi% (the above-listed [Method 1]).

### [Measurement for particle size distribution in solid food composition sample]

A 2% solid food composition aqueous dispersion obtained by immersing 1 g of each solid food composition sample in 50 g of distilled water at about 80°C, allowing to stand still for about 5 minutes, and thereafter, vigorously stirring with a spatula, suspending, and passing through a 7.5 mesh sieve having an opening of 2.36 mm and a wire diameter of 1.0 mm according to the new JIS was used as a sample for measuring the particle size distribution.

As the laser diffraction particle size distribution analyzer, Microtrac MT3300 EX2 system of MicrotracBEL Corporation was used, and the particle size distribution of the particles in each solid food composition sample was measured. As the measurement application software, DMSII (Data Management System version 2, MicrotracBEL Corporation) was used. The distilled water was used as the solvent in the measurement, and the measurement was performed by pressing down the washing button of the measurement application software to implement washing, pressing down the set zero button of the software to implement zero adjustment, and directly charging the sample by sample loading until the concentration of the sample falls within an appropriate range.

The measurement of a sample before ultrasonication to which no disturbance was applied was performed by adjusting the sample concentration within an appropriate range by two times of sample loading after charging the sample, and immediately performing a laser diffraction measurement at a flow rate of 60% for a measurement time of 10 seconds, and the result obtained was used as the measured value. On the other hand, the measurement of a sample after ultrasonication to which disturbance was applied was performed by adjusting the sample concentration within an appropriate range by sample loading after charging the sample, pressing down the ultrasonication button of the software to apply ultrasonic waves having a frequency of 40 kHz at an output of 40 W for 3 minutes. Subsequently, defoaming was performed three times, and then sample loading was performed again. Immediately after verification that the sample concentration was still within the appropriate range, the laser diffraction measurement was performed at a flow rate of 60% for a measurement time of 10 seconds, and the result obtained was used as the measured value to measure d50, the cumulative frequency in % in a range of 100 µm or more and 1,000 µm or less, the specific surface area per unit volume, and the like. The measurement conditions used were; distribution display: volume, particle refractive index: 1.60, solvent refractive index: 1.333 (water), upper limit of measurement (µm) - 2,000.00 µm, lower limit of measurement (µm) = 0.021 µm.

In the measurement of the particle size distribution for each measurement channel of the samples, the particle size for each measurement channel shown in the above-mentioned Table 2 was used as the standard to perform the measurement. The particle frequency in % of each channel was determined by measuring the frequency of particles which are not larger than the particle size specified for each of the channels and larger than the particle size (in the channel largest in the measurement range, measurement lower limit of particle size) specified for the channel of a larger number by one for each channel, and using the total frequency of all channels within the measurement range as the denominator. Specifically, the particle frequency in % for each of the 132 channels below was measured. From the results obtained by the measurement, the particle size of the channel having the largest particle size was defined as the maximum particle size.

### [Measurement for specific surface area of particles in solid food composition sample]

Each solid food composition sample was pretreated in the same manner as the case of the above-mentioned measurement of the particle size distribution, and the specific surface area per unit volume (1 mL) in the case of assuming that the particles are spherical was measured using the above-mentioned laser diffraction particle size distribution analyzer. The specific surface area per unit volume in the case of assuming that the particles are spherical was determined by 6 × ∑(ai) ÷ ∑(ai·di), provided that the surface area per particle is ai and the particle size is di.

### [Sensory evaluation of solid food composition sample]

The solid food composition samples of Comparative Examples 1 to 6 and Test Examples 1 to 15 obtained in the above procedure were subjected to sensory evaluations by the following procedure.

The sensory inspectors who perform each sensory inspection were chosen from inspectors who were trained for the discrimination tests of the taste, texture, and appearance of foods in advance, and showed particularly excellent results, had experience in product development and a wealth of knowledge about the quality of foods, such as taste, texture, and appearance, and were capable of performing absolute evaluation on each sensory inspection item.

Next, sensory tests to evaluate the quality were performed with respect to the solid food composition sample of each Comparative Example and each Test Example by a total of ten trained sensory inspectors selected by the following procedures. In these sensory tests, each of the items: "chewy texture", "easiness in biting off", and "overall evaluation" was evaluated on a scale up to 5 according to the following criteria.

In each of the evaluation items, all the inspectors evaluated standard samples in advance, and each score of the evaluation criteria was standardized. The sensory inspection was then performed with objectivity by 10 inspectors. The evaluation of each item was made by selecting a rating closest to the inspector's own evaluation on a five-grade scale of each item. The total result of the evaluation was calculated from the arithmetic mean values of the scores by 10 inspectors and rounded off after the decimal point.

### <Evaluation criterion 1: chewy texture (physical properties of flexibly deforming while having shape retainability and certain resilience at the time of being bitten)>

5: Chewy texture is sufficiently strongly sensed, which is favorable.
4: Chewy texture is slightly strongly sensed, which is slightly favorable.
3: Chewy texture is sensed, which is acceptable.
2: Chewy texture is slightly weak, which is slightly unfavorable.
1: Chewy texture is weak, which is unfavorable.

### <Evaluation criterion 2: easiness in biting off (easiness in biting off when composition having a thickness of 1 cm was bitten and eaten)>

5: It hardly adheres to the teeth, is smoothly bitten off, which is favorable.
4: It slightly hardly adheres to the teeth, is slightly smoothly bitten off, which is slightly favorable.
3: Easiness in biting off is moderate, which is acceptable.
2: It slightly easily adheres to the teeth, is slightly not smoothly bitten off, which is slightly unfavorable.
1: It easily adheres to the teeth, is not smoothly bitten off, which is unfavorable.

### <Evaluation criterion 3: overall evaluation (achievement of both chewy texture and easiness in biting off)>

5: It sufficiently has a chewy texture, is easily bitten off, which is favorable.
4: It has a chewy texture, is slightly easily bitten off, which is slightly favorable.
3: Both chewy texture and easiness in biting off are moderate, which is acceptable.
2: It is slightly easily bitten off but has a slightly weak chewy texture, or it has a slightly strong chewy texture and is slightly difficult to bite off, which is slightly unfavorable.
1: It is easily bitten off but has a too weak chewy texture, or a chewy texture is too strong and it is difficult to bite off, which is unfavorable.

### [Analysis and evaluation results of solid food composition sample]

The following Table 3 to Table 6 show measured values such as the content of components, physical properties and the evaluation results of the sensory test of the solid food composition sample of Comparative Examples 1 to 6 and Test Examples 1 to 15.

**[Table 3]**

| | Foodstuff containing insoluble dietary fiber (main) | Blend proportion of raw material before processing | | | | | | | | | | | | | |
|---|---|---|---|---|---|---|---|---|---|---|---|---|---|---|---|
| | | Vegetables/pulses/potatoes | | | | | | | | | Fruits | | | Grains | |
| | | [Edible part] dried cabbage powder + [Insoluble dietary fiber localized site (inedible part)] dried cabbage powder (core) | [Edible part] dried spinach powder + [Insoluble dietary fiber localized site (inedible part)] dried spinach powder (plant foot) | [Edible part] dried pea (green pea) powder + [Insoluble dietary fiber localized site (inedible part)] dried pea powder (pod) | [Edible part] dried soybean (green soybean) powder + [Insoluble dietary fiber localized site (inedible part)] dried soybean (green soybean) powder (pod) | [Edible part] dried beet root powder + [Insoluble dietary fiber localized site (inedible part)] dried beet root powder (skin) | [Edible part] dried beet root powder | [Edible part] dried paprika powder + [Insoluble dietary fiber localized site (inedible part)] dried paprika powder (seed, calyx) | [Edible part] dried sweet potato powder + [Insoluble dietary fiber localized site (inedible part)] dried sweet potato powder (surface layer, both ends) | [Edible part] dried cauliflower powder | [Edible part] dried orange powder + [Insoluble dietary fiber localized site (inedible part)] dried orange powder (pericarp) | [Edible part] dried pineapple powder | [Edible part] dried mango powder | [Edible part] dried corn powder + [Insoluble dietary fiber localized site (inedible part)] dried corn powder (core) | [Edible part] dried corn powder |
| | | Mass% | Mass% | Mass% | Mass% | Mass% | Mass% | Mass% | Mass% | Mass% | Mass% | Mass% | Mass% | Mass% | Mass% |
| Test Example 1 | Corn | | | | | | | | | 14 | | 2 | 2 | 25 | |
| Test Example 2 | Corn | 14 | | | | | | | | | | 2 | 2 | 25 | |
| Test Example 3 | Corn | | | | | | | | | | | 2 | 2 | 39 | |
| Comparative Example 1 | Corn | | | | | | | | | 14 | | 2 | 2 | | 25 |
| Comparative Example 2 | Corn | | | | | | | | | 14 | | 2 | 2 | 25 | |
| Test Example 4 | Beet | | | | | 28 | | | | 6 | 5 | | 6 | | |
| Test Example 5 | Beet | | | | | 20 | | | | 14 | 5 | | 6 | | |
| Test Example 6 | Beet | | | | | 15 | | | | 19 | 5 | | 6 | | |
| Test Example 7 | Beet | | | | | 10 | | | | 24 | 5 | | 6 | | |
| Test Example 8 | Beet | | | | | 5 | | | | 29 | 5 | | 6 | | |
| Test Example 9 | Beet | | | | | 28 | | | | 6 | 5 | | 6 | | |
| Comparative Example 3 | Beet | | | | | | 28 | | | 6 | 5 | | 6 | | |
| Test Example 10 | Paprika | | | | | | | 32 | | | | | 7 | | |
| Comparative Example 4 | Paprika | | | | | | | 32 | | | | | 7 | | |
| Test Example 11 | Sweet potato | | | | | | | | 28 | 13 | | | 7 | | |
| Comparative Example 5 | Sweet potato | | | | | | | | 28 | 13 | | | 7 | | |
| Test Example 12 | Soybean (green soybean) | | | | 25 | | | | | 10 | | | 9 | | |
| Comparative Example 6 | Soybean (green soybean) | | | | 25 | | | | | 10 | | | 9 | | |
| Test Example 13 | Soybean (green soybean) | 10 | 2 | 5 | 18 | | | | | 3 | 9 | | | | |
| Test Example 14 | Soybean (green soybean) | 10 | 2 | 5 | 18 | | | | | 3 | 9 | | | | |
| Test Example 15 | Soybean (green soybean) | 10 | 2 | 5 | 18 | | | | | 3 | 9 | | | | |

**[Table 4]**

| | Foodstuff containing insoluble dietary fibers (main) | Blend proportion of raw material before processing (dough) | | | | | | | Measured value before processing (dough) | | Processing step | | |
|---|---|---|---|---|---|---|---|---|---|---|---|---|---|
| | | Others | | | | | | | | | | | |
| | | Concentrated date fruit juice (Brix75) | Quinoa puff | Dice almond | Olive oil | Rapeseed oil | Water | Total | Saccharide content | Moisture content | Kneading conditions | Drying conditions | |
| | | Mass% | Mass% | Mass% | Mass% | Mass% | Mass% | Mass% | Mass% | Mass% | | Drying temperature (°C) | Drying time (minutes) |
| Test Example 1 | Corn | 34 | 3 | 10 | 10 | | | 100 | 49 | 20 | Kneading under pressure (squeezer) | 80 | 4 |
| Test Example 2 | Corn | 34 | 3 | 10 | | 10 | | 100 | 49 | 21 | Kneading under pressure (squeezer) | 60 | 4 |
| Test Example 3 | Corn | 34 | 3 | 10 | | 10 | 20 | 120 | 52 | 40 | Kneading under pressure (squeezer) | 60 | 4 |
| Comparative Example 1 | Corn | 34 | 3 | 10 | 10 | | | 100 | 48 | 20 | Kneading under pressure (squeezer) | 80 | 4 |
| Comparative Example 2 | Corn | 34 | 3 | 10 | 10 | | 30 | 130 | 49 | 38 | Kneading under normal pressure | 120 | 8 |
| Test Example 4 | Beet | 30 | | 15 | 10 | | | 100 | 48 | 17 | Kneading under pressure (squeezer) | 70 | 4 |
| Test Example 5 | Beet | 30 | | 15 | 10 | | | 100 | 47 | 18 | Kneading under pressure (squeezer) | 70 | 4 |
| Test Example 6 | Beet | 30 | | 15 | 10 | | | 100 | 45 | 18 | Kneading under pressure (squeezer) | 70 | 4 |
| Test Example 7 | Beet | 30 | | 15 | 10 | | | 100 | 44 | 18 | Kneading under pressure (squeezer) | 70 | 4 |
| Test Example 8 | Beet | 30 | | 15 | 10 | | 5 | 105 | 43 | 23 | Kneading under pressure (squeezer) | 70 | 4 |
| Test Example 9 | Beet | 30 | | 15 | 10 | | 10 | 110 | 48 | 17 | Kneading under pressure (squeezer) | 70 | 4 |
| Comparative Example 3 | Beet | 30 | | 15 | 10 | | 40 | 140 | 52 | 48 | Kneading under normal pressure | 130 | 8 |
| Test Example 10 | Paprika | 31 | 5 | 15 | 10 | | | 100 | 49 | 10 | Kneading under pressure (squeezer) | 80 | 3 |
| Comparative Example 4 | Paprika | 31 | 5 | 15 | 10 | | 50 | 150 | 49 | 60 | Kneading under normal pressure | 140 | 10 |
| Test Example 11 | Sweet potato | 29 | | 13 | 10 | | | 100 | 55 | 10 | Kneading under pressure (squeezer) | 90 | 3 |
| Comparative Example 5 | Sweet potato | 29 | | 13 | 10 | | 50 | 150 | 55 | 60 | Kneading under normal pressure | 150 | 8 |
| Test Example 12 | Soybean (green soybean) | 33 | | 13 | 10 | | | 100 | 40 | 8 | Kneading under pressure (extruder) | 80 | 4 |
| Comparative Example 6 | Soybean (green soybean) | 33 | | 13 | 10 | | 60 | 160 | 40 | 70 | Kneading under normal pressure | 160 | 8 |
| Test Example 13 | Soybean (green soybean) | 35 | | 10 | 8 | | | 100 | 43 | 9 | Kneading under pressure (extruder) | 80 | 4 |
| Test Example 14 | Soybean (green soybean) | 35 | | 10 | 8 | | 10 | 110 | 43 | 19 | Kneading under pressure (extruder) | 80 | 3 |
| Test Example 15 | Soybean (green soybean) | 35 | | 10 | 8 | | 20 | 120 | 43 | 29 | Kneading under pressure (extruder) | 80 | 1 |

**[Table 5]**

| | Foodstuff containing insoluble dietary fibers (main) | Measured value of solid food composition (after heating) | | | | | | | | | | |
|---|---|---|---|---|---|---|---|---|---|---|---|---|
| | | Insoluble dietary fiber localized site (inedible part) content | Vegetables, grains, potatoes, and fruits content (edible part + insoluble dietary fiber localized site (inedible part)) | Insoluble dietary fiber localized site (inedible part)/(edible part + insoluble dietary fiber localized site (inedible part)) | Insoluble dietary fiber content | Pulses content | Protein content | Total fat/oil content | Moisture content | Starch content | Sucrose content | Amount in terms of monosaccharides |
| | | Mass% | Mass% | Mass% | Mass% | Mass% | Mass% | Mass% | Mass% | Mass% | Mass% | Mass% |
| Test Example 1 | Corn | 13.8 | 41 | 33.8 | 12 | 0 | 9 | 12 | 15 | 6.8 | 9.6 | 49.1 |
| Test Example 2 | Corn | 16.6 | 41 | 40.7 | 11 | 0 | 7 | 12 | 15 | 6.5 | 8.9 | 48.8 |
| Test Example 3 | Corn | 21.5 | 41 | 52.7 | 13 | 0 | 6 | 13 | 15 | 8.7 | 11.0 | 52.5 |
| Comparative Example 1 | Corn | 0.0 | 41 | 0.0 | 7 | 0 | 10 | 12 | 15 | 6.5 | 9.6 | 47.6 |
| Comparative Example 2 | Corn | 13.8 | 41 | 33.8 | 12 | 0 | 9 | 12 | 3 | 6.8 | 9.6 | 49.1 |
| Test Example 4 | Beet | 3.2 | 42 | 7.5 | 10 | 0 | 8 | 11 | 12 | 1.4 | 22.5 | 48.5 |
| Test Example 5 | Beet | 2.4 | 42 | 5.6 | 10 | 0 | 9 | 11 | 12 | 1.5 | 18.1 | 46.6 |
| Test Example 6 | Beet | 1.9 | 42 | 4.5 | 10 | 0 | 10 | 11 | 12 | 1.5 | 15.4 | 45.4 |
| Test Example 7 | Beet | 1.4 | 42 | 3.3 | 10 | 0 | 11 | 11 | 13 | 1.6 | 12.6 | 44.2 |
| Test Example 8 | Beet | 0.9 | 42 | 2.1 | 10 | 0 | 12 | 11 | 13 | 1.6 | 9.9 | 43.0 |
| Test Example 9 | Beet | 3.2 | 42 | 7.5 | 10 | 0 | 8 | 11 | 2 | 1.4 | 22.5 | 48.5 |
| Comparative Example 3 | Beet | 0.4 | 42 | 0.9 | 7 | 0 | 7 | 10 | 3 | 1.7 | 22.5 | 52.4 |
| Test Example 10 | Paprika | 3.2 | 37 | 8.7 | 8 | 0 | 6 | 12 | 5 | 3.2 | 6.1 | 48.8 |
| Comparative Example 4 | Paprika | 3.2 | 37 | 8.7 | 8 | 0 | 6 | 12 | 5 | 3.2 | 6.1 | 48.8 |
| Test Example 11 | Sweet potato | 2.8 | 45 | 6.2 | 7 | 0 | 7 | 10 | 5 | 21.1 | 8.6 | 55.2 |
| Comparative Example 5 | Sweet potato | 2.8 | 45 | 6.2 | 7 | 0 | 7 | 10 | 5 | 21.1 | 8.6 | 55.2 |
| Test Example 12 | Soybean (green soybean) | 13.8 | 18 | 77.8 | 13 | 24 | 11 | 13 | 3 | 1.1 | 11.2 | 40.0 |
| Comparative Example 6 | Soybean (green soybean) | 13.8 | 18 | 77.8 | 13 | 24 | 11 | 13 | 5 | 1.1 | 11.2 | 40.0 |
| Test Example 13 | Soybean (green soybean) | 15.8 | 23 | 69.4 | 13 | 22 | 10 | 10 | 4 | 1.2 | 6.8 | 42.6 |
| Test Example 14 | Soybean (green soybean) | 15.8 | 23 | 69.4 | 13 | 22 | 10 | 10 | 4 | 1.2 | 6.8 | 42.6 |
| Test Example 15 | Soybean (green soybean) | 15.8 | 23 | 69.4 | 13 | 22 | 10 | 10 | 4 | 1.2 | 6.8 | 42.6 |

**[Table 6]**

| | Foodstuff containing insoluble dietary fibers (main) | Measured value of solid food composition | | | | | | | | | | | | Sensory inspection | | |
|---|---|---|---|---|---|---|---|---|---|---|---|---|---|---|---|---|
| | | Average of minimum differential value (strain ratio 30% or less) | Proportion of region where minimum differential value is -900 kN/m²% or more in surface of composition | Average of maximum value of stress (strain ratio 30% or less) | Proportion of region where maximum value of surface stress of composition is 8,000 kN/m²% or less | Aqueous dispersion of solid food composition before ultrasonication | | Aqueous dispersion of solid food composition after ultrasonication | | | | | | Chewy texture | Easiness in biting off | Overall evaluation |
| | | | | | | Cumulative frequency in % 100 µm or more and 1,000 µM or less | Specific surface area per unit volume | Cumulative frequency in % 100 µm or more and 1,000 µm or less | | d50 | Maximum particle size after ultrasonication | Specific surface area per unit volume | | | | |
| | | kN/m²% | % | kN/m² | % | % | γB[m²/mL] | % | Difference before and after ultrasonication (%) | 4. | 4. | γA[m²/mL] | Difference before and after ultrasonication (γA-γB) [m²/mL] | | | |
| Test Example 1 | Corn | -77 | 50 | 4074 | 100 | 74 | 0.06 | 71 | -3 | 500 | 2000 | 0.21 | 0.15 | 5 | 5 | 5 |
| Test Example 2 | Corn | 0 | 100 | 5478 | 100 | 70 | 0.08 | 70 | 0 | 131 | 1184 | 0.09 | 0.01 | 5 | 5 | 5 |
| Test Example 3 | Corn | -558 | 50 | 6467 | 70 | 30 | 0.19 | 56 | 26 | 131 | 996 | 0.24 | 0.05 | 4 | 4 | 4 |
| Comparative Example 1 | Corn | -126 | 30 | 3180 | 100 | 78 | 0.05 | 77 | -1 | 255 | 2000 | 0.19 | 0.14 | 5 | 3 | 1 |
| Comparative Example 2 | Corn | -1745 | 0 | 8471 | 0 | 16 | 0.09 | 3 | -13 | 309 | 996 | 0.85 | 0.75 | 1 | 5 | 1 |
| Test Example 4 | Beet | 0 | 100 | 5342 | 80 | 78 | 0.05 | 81 | 3 | 296 | 2000 | 0.10 | 0.05 | 5 | 5 | 5 |
| Test Example 5 | Beet | -84 | 100 | 2820 | 100 | 80 | 0.05 | 81 | 1 | 653 | 2000 | 0.11 | 0.06 | 5 | 5 | 5 |
| Test Example 6 | Beet | -165 | 100 | 1871 | 100 | 70 | 0.09 | 70 | 0 | 853 | 2000 | 0.15 | 0.06 | 5 | 5 | 5 |
| Test Example 7 | Beet | -284 | 70 | 1836 | 100 | 78 | 0.05 | 75 | -3 | 40 | 1826 | 0.14 | 0.09 | 5 | 4 | 5 |
| Test Example 8 | Beet | -347 | 50 | 2982 | 100 | 70 | 0.10 | 65 | -5 | 262 | 2000 | 0.20 | 0.10 | 4 | 4 | 5 |
| Test Example 9 | Beet | -422 | 30 | 3360 | 100 | 74 | 0.07 | 64 | -10 | 275 | 592 | 0.50 | 0.43 | 4 | 4 | 4 |
| Comparative Example 3 | Beet | -1097 | 0 | 11340 | 10 | 72 | 0.07 | 60 | -12 | 832 | 2000 | 0.61 | 0.55 | 2 | 2 | 2 |
| Test Example 10 | Paprika | -40 | 30 | 4035 | 100 | 79 | 0.05 | 82 | 3 | 315 | 1408 | 0.10 | 0.04 | 5 | 5 | 5 |
| Comparative Example 4 | Paprika | -948 | 0 | 11828 | 15 | 41 | 0.15 | 25 | -16 | 364 | 1408 | 0.92 | 0.77 | 1 | 5 | 1 |
| Test Example 11 | Sweet potato | -42 | 80 | 6120 | 90 | 66 | 0.06 | 67 | 1 | 201 | 2000 | 0.12 | 0.06 | 5 | 5 | 5 |
| Comparative Example 5 | Sweet potato | -969 | 0 | 6245 | 50 | 28 | 0.12 | 17 | -11 | 180 | 704 | 0.76 | 0.65 | 2 | 5 | 2 |
| Test Example 12 | Soybean (green soybean) | 0 | 100 | 5022 | 100 | 73 | 0.05 | 69 | -4 | 14 | 1184 | 0.23 | 0.18 | 5 | 5 | 5 |
| Comparative Example 6 | Soybean (green soybean) | -981 | 0 | 4514 | 40 | 44 | 0.17 | 32 | -12 | 222 | 419 | 0.90 | 0.73 | 1 | 5 | 1 |
| Test Example 13 | Soybean (green soybean) | 0 | 100 | 5402 | 90 | 55 | 0.24 | 52 | -3 | 260 | 837 | 0.28 | 0.04 | 5 | 5 | 5 |
| Test Example 14 | Soybean (green soybean) | -705 | 25 | 4778 | 70 | 45 | 0.20 | 33 | -12 | 498 | 1184 | 0.55 | 0.35 | 4 | 4 | 3 |
| Test Example 15 | Soybean (green soybean) | -870 | 15 | 4961 | 60 | 34 | 0.24 | 13 | -21 | 665 | 2000 | 0.69 | 0.45 | 3 | 4 | 3 |

### [Industrial Applicability]

The solid food composition containing insoluble dietary fibers of the present invention and the manufacturing method thereof can be conveniently and widely used in the field of foods and has a significantly high utility.

## Claims

1. A solid food composition containing a foodstuff containing insoluble dietary fibers, the solid food composition satisfying the following characteristics (1) to (5) :
(1) the solid food composition contains an edible part and an insoluble dietary fiber localized site of one or more foodstuffs containing insoluble dietary fibers, wherein a content of the foodstuff is 5 mass% or more and 95 mass% or less in terms of total dry mass;
(2) an insoluble dietary fiber content is 3 mass% or more;
(3) a moisture content is less than 30 mass%;
(4) a 50% integrated diameter of particle size of particles in an aqueous dispersion of the solid food composition after ultrasonication is more than 5 µm and 1,000 µm or less; and
(5) an average of a minimum differential value measured by Method 1 is -900 kN/m²%or more:
[Method 1]
To press a surface of the solid food composition having a material temperature of 20°C to a strain ratio of 30% at a descending speed of 1 mm/second by a plate-like plunger having a cross-sectional area of 5 mm² (1 mm in length × 5 mm in width) using a texture analyzer, measure a stress (kN/m²) continuously at an interval of 0.1 seconds, and then divide a stress value difference (kN/m²) between the strain ratios by a strain ratio difference (%) to determine a differential value (kN/m²%) at each strain ratio (%).

2. The solid food composition according to claim 1, wherein an average of a maximum value of the stress measured by Method 1 is 8,000 kN/m² or less.

3. The solid food composition according to claim 1 or 2, wherein a difference in a cumulative frequency in % of a particle size of 100 µm or more and 1,000 µm or less of the particles in the aqueous dispersion of the solid food composition before and after ultrasonication is within ±30%.

4. The solid food composition according to any one of claims 1 to 3, wherein a maximum particle size of the particles in the aqueous dispersion of the solid food composition after ultrasonication is 300 µm or more.

5. The solid food composition according to any one of claims 1 to 4, wherein a difference in a specific surface area per unit volume (m²/mL) of the particles in the aqueous dispersion of the solid food composition before and after ultrasonication is 0.5 or less.

6. The solid food composition according to any one of claims 1 to 5, wherein a proportion of a region where a minimum differential value is -900 kN/m²% or more when measured by Method 1 is 20% or more of a surface of the solid food composition.

7. The solid food composition according to any one of claims 1 to 6, wherein a protein content is 2 mass% or more.

8. The solid food composition according to any one of claims 1 to 7, wherein a sucrose content is less than 50 mass%.

9. The solid food composition according to any one of claims 1 to 8, containing no egg and/or no milk.

10. The solid food composition according to any one of claims 1 to 9, wherein the foodstuff containing insoluble dietary fibers is one or more selected from the group consisting of nuts, grains, pulses, vegetables, potatoes, and fruits.

11. The solid food composition according to any one of claims 1 to 10, wherein the foodstuff containing insoluble dietary fibers is one or more selected from the group consisting of corn, soybean, pea, cabbage, sweet potato, paprika, beet, spinach, and citrus fruits.

12. The solid food composition according to any one of claims 1 to 11, wherein the foodstuff containing insoluble dietary fibers is the foodstuff subjected to drying treatment.

13. The solid food composition according to any one of claims 1 to 12, wherein a water activity value of the foodstuff containing insoluble dietary fibers is 0.95 or less.

14. The solid food composition according to any one of claims 1 to 13, containing the edible part and the insoluble dietary fiber localized site of the same kind of foodstuff containing insoluble dietary fibers.

15. The solid food composition according to any one of claims 1 to 14, wherein {insoluble dietary fiber localized site/(edible part + insoluble dietary fiber localized site)} of the foodstuff containing insoluble dietary fibers is 1 mass% or more.

16. The solid food composition according to any one of claims 1 to 15, wherein the insoluble dietary fiber localized site of the foodstuff containing insoluble dietary fibers contains one or more selected from the group consisting of core of corn, pod of soybean, pod of pea, core of cabbage, both ends of sweet potato, seed or calyx of paprika, skin of beet, plant foot of spinach, and skin of citrus fruits.

17. A food/drink comprising the solid food composition according to any one of claims 1 to 16.

18. A liquid or solid seasoning comprising the solid food composition according to any one of claims 1 to 16.

19. A method for manufacturing the solid food composition containing a foodstuff containing insoluble dietary fibers according to any one of claims 1 to 16, comprising the following steps (i) to (ii):
(i) mixing and kneading a composition containing an edible part and an insoluble dietary fiber localized site of one or more foodstuffs containing insoluble dietary fibers, such that a content of the foodstuff is 5 mass% or more and 95 mass% or less in terms of total dry mass and an insoluble dietary fiber content is 3 mass% or more to manufacture dough;
(ii) forming the dough under pressurized conditions followed by drying until a maximum particle size of particles in an aqueous dispersion of the solid food composition after ultrasonication is 300 µm or more and an average of a minimum differential value measured by Method 1 is -900 kN/m²% or more to obtain a solid food composition.

20. The method according to claim 19, comprising, in the step (ii), forming the dough under pressurized conditions until the solid food composition has a region where a minimum differential value at a strain ratio of 30% or less is -900 kN/m²% or more and a maximum stress is 8,000 kN/m² or less, when a surface of the solid food composition is measured by Method 1.

21. The method according to claim 19 or 20, comprising, in the step (ii), forming the dough under pressurized conditions such that a difference in cumulative frequency in % of the particle size of 100 µm or more and 1,000 µm or less of the particles in the aqueous dispersion of the solid food composition before and after ultrasonication is within ±30%.

22. The method according to any one of claims 19 to 21, comprising, in the step (ii), forming the dough under pressurized conditions such that a specific surface area per unit volume (m²/mL) after ultrasonication is 0.5 or less.

23. The method according to any one of claims 19 to 22, comprising, in the step (i), mixing and kneading the foodstuff such that a protein content is 2 mass% or more to manufacture the dough.

24. The method according to any one of claims 19 to 23, comprising, in the step (i), mixing and kneading the foodstuff such that a sucrose content is less than 50 mass% to manufacture the dough.

25. The method according to any one of claims 19 to 24, comprising, in the step (i), mixing and kneading the foodstuff so as to contain no egg and/or no milk to manufacture the dough.

26. The method according to any one of claims 19 to 25, comprising, in the step (i), subjecting the foodstuff containing insoluble dietary fibers to drying treatment in advance.

27. The method according to any one of claims 19 to 26, comprising, in the step (i), blending a crushed product of the edible part and the insoluble dietary fiber localized site of the foodstuff containing insoluble dietary fibers and a carbohydrate.

28. The method according to any one of claims 19 to 27, comprising, in the step (ii), drying the solid food composition after forming at a temperature less than 110°C.

29. The method according to any one of claims 19 to 28, wherein in the step (ii), drying is performed such that the difference in the moisture content before and after drying treatment is less than 30 mass%.

30. A method for manufacturing a food/drink, comprising incorporating the solid food composition according to any one of claims 1 to 16.

31. A method for manufacturing a liquid or solid seasoning, comprising incorporating the solid food composition according to any one of claims 1 to 16.
